# EUROPEAN PATENT APPLICATION

(11) **EP 4 513 596 A1**
(43) Date of publication of application: **26.02.2025**
(21) Application number: 22966262.2
(22) Date of filing: 25.11.2022
(51) Int. Cl.: H01M 4/587, H01M 10/0525

(54) **CARBON MATERIAL AND PREPARATION METHOD THEREFOR, AND SECONDARY BATTERY AND ELECTRIC DEVICE COMPRISING SAME**

(71) Applicant: Contemporary Amperex Technology (Hong Kong) Limited, Central, Central And Western District (HK)
(72) Inventor: LI, Lianchuan, Ningde City, Fujian 352100 (CN); LI, Yuanyuan, Ningde City, Fujian 352100 (CN); SHEN, Rui, Ningde City, Fujian 352100 (CN); HE, Libing, Ningde City, Fujian 352100 (CN)
(74) Representative: Kraus & Lederer PartGmbB
(86) International application number: PCT/CN2022/134444
(87) International publication number: WO 2024/108574

(57) **Abstract**

The present application provides a carbon material, a method for preparing the same, and a secondary battery and an electrical device comprising the same. The carbon material includes a pore structure, an adsorption amount of linseed kernel oil to 100g of the carbon material 100 g is denoted as A in ml, a specific surface area of the carbon material is denoted as B in m²/g and the carbon material satisfies: 36 ≤ A×B ≤ 75. The carbon material provided in the present application can make the secondary battery have high initial columbic efficiency, high energy density and good cycle performance and storage performance.

## Description

### TECHNICAL FIELD

The present application belongs to the field of battery technology, and specifically relates to a carbon material and a method for preparing the same, and a secondary battery and an electrical device comprising the same.

### BACKGROUND

In recent years, secondary batteries have been widely used in energy storage power systems such as hydro, thermal, wind and solar power plants, as well as electric tools, electric bicycles, electric motorcycles, electric vehicles, military equipment, aerospace and many other fields. As the application range of secondary batteries becomes more and more extensive, serious challenges have been posed to performances of secondary batteries, such as the requirement for secondary batteries to balance a variety of properties such as high energy density and long service life. Negative electrode active materials are an important part of secondary batteries, because they affect performances of the secondary batteries. At present, the negative electrodes active materials mainly includes graphite. However, the problem faced in the prior art is that it is difficult to have high-capacity graphite with high initial Coulombic efficiency, and thus it is difficult to make secondary batteries to have good cycle performance and storage performance.

### SUMMARY

The present application is intended to provide a carbon material, a method for preparing the same, and a secondary battery and an electrical device comprising the same. The carbon material provided in the present application can make the secondary battery have high first-time columbic efficiency, high energy density, good cycle performance and storage performance.

A first aspect of the present application provides a carbon material, wherein the carbon material comprises a pore structure, an adsorption amount of linseed kernel oil to 100g of the carbon material 100 g is denoted as A in ml, a specific surface area of the carbon material is denoted as B in m²/g and the carbon material satisfies: 36 ≤ A×B ≤ 75.

The carbon material provided in the present application can effectively reduce the irreversible capacity loss of secondary batteries, improve the capacity exertion characteristics of secondary batteries, and enable the secondary batteries to have a high initial Coulombic efficiency, a high energy density, and a good cycling performance and storage performance.

In some embodiments of the present application, 38 ≤ A×B ≤ 65, optionally, 39 ≤ A×B ≤ 55. As a result, it is possible to enable the secondary battery to have better balanced high initial Coulombic efficiency, high energy density, good cycle performance and storage performance.

In some embodiments of the present application, the adsorption amount of linseed kernel oil to 100g of the first carbon-based material is from 30 mL to 50 mL, optionally from 35 mL to 47 mL. When the adsorption amount of linseed kernel oil to the carbon material is within the above range, particles of the carbon material have less surface side reaction activity, thereby reducing consumption of active ions due to the formation of the SEI film, and avoiding the surface of the particles from becoming too dense, which would affect transport of active ions; furthermore, it is possible to form a reasonable channel structure between the particles of the negative electrode film layer, thereby improving infiltration of an electrolytic solution into the negative electrode plate.

In some embodiments of the present application, the specific surface area B of the carbon material is from 0.5 m²/g to 2.1 m²/g, optionally from 0.7 m²/g to 1.8 m²/g. When the specific surface area of the carbon material is within the above range, on the one hand, the carbon material can have less surface side reaction activity, thereby reducing consumption of active ions due to the formation of the SEI film, and enhancing the initial Coulombic efficiency of the carbon material; on the other hand, the carbon material can have higher active ion transport performance.

In some embodiments of the present application, the carbon material comprises more than one pore structure having a pore area greater than or equal to 0.1 µm², optionally more than one pore structure having a pore area of 0.12 µm² to 2.5 µm². When the carbon material further comprises the pore structure having the pore area as described above, the pore structure can reserve a required expansion space for the volume change of particles of carbon material, whereby the risk of the carbon material particles breaking up to create a new interface can be further reduced, which in turn can reduce occurrence of a side reaction, reduce irreversible loss of capacity of the secondary battery, and further improve cycle performance and storage performance of the secondary battery.

In some embodiments of the present application, the carbon material comprises an external region and an internal region disposed on the inside of the external region, the external region being a region formed by extending for a distance of 0.25 L from the surface of the particles of the carbon material towards the inside of the particles, L being a short-axis length of the particles of the carbon material; total pore area of the external region being denoted as S₁ and total pore area of the internal region being denoted as S₂, and S₂ > S₁. When particles of the carbon material further satisfy S₂ > S₁, it is possible to effectively reduce the irreversible loss of capacity of secondary batteries and to improve the capacity exertion characteristics of secondary batteries while enabling the secondary batteries to have better balanced high initial Coulombic efficiency, high energy density and good cycle performance and storage performance.

In some embodiments of the present application, 1.3 ≤ S₂/S₁ ≤ 450, optionally 1.8 ≤ S₂/S₁ ≤ 400. When S₂/S₁ further satisfies the above condition, it is possible to enable the secondary batteries to have better balanced high initial columbic efficiency, high energy density and good cycle performance and storage performance.

In some embodiments of the present application, 0.01µm² ≤ S₁ ≤ 12.0µm², optionally 0.02µm² ≤ S₁ ≤ 7.0µm². When the total pore area of the external region of the carbon material is within the above range, on the one hand, the carbon material particles can have a less surface defect and a more stable structure, avoiding infiltration of an electrolytic solution into the pore structure inside the carbon material particles as much as possible, thereby reducing the side reactions and reducing the consumption of active ions by SEI film formation inside the carbon material particles. On the other hand, the transport performance of active ions and electrons will not be affected.

In some embodiments of the present application, 2.5µm² ≤ S₂ ≤ 25.0µm², optionally 3.0µm² ≤ S₂ ≤ 20.5µm². When the total pore area of the internal region of the carbon material is within the above range, on the one hand, sufficient and stable expansion space can be reserved for the volume change of the carbon material particles, thereby reducing the risk of the carbon material particles breaking out to create new interfaces, reducing the side reactions on the surface of the new interfaces, and reducing the consumption of active ions by SEI film formation on the surface of the new interfaces. On the other hand, the capacity and initial columbic efficiency of the carbon material can be improved.

In some embodiments of the present application, L ≥ 4 µm, optionally 6 µm ≤ L ≤ 18 µm.

In some embodiments of the present application, the pore structure in the external region of the carbon material has an area of less than or equal to 0.2 µm², optionally less than or equal to 0.15 µm². By controlling the area of the pore structure in the external region of the carbon material within the above range, the external region of the carbon material can have a denser structure, which can effectively reduce the surface defect of the carbon material, improve the structural stability of the carbon material, avoid electrolyte infiltration into the pore structure inside the carbon material particles as much as possible, and thus further improve the cycle performance and storage performance of secondary batteries.

In some embodiments of the present application, the internal region of the carbon material includes more than one pore structure having an area of greater than or equal to 0.15 µm², optionally more than one pore structure having an area of from 0.18 µm² to 2.5 µm². By including the pore structure with the above mentioned area in the internal region of the carbon material, sufficient and stable expansion space can be reserved for the volume change of the carbon material particles, thereby reducing the risk of the carbon material particle breaking out. On the other hand, the compaction density of the carbon material can be improved.

In some embodiments of the present application, the external region of the carbon material has an interlayer spacing, denoted as d₁, the internal region of the carbon material has an interlayer spacing, denoted as d₂, and the carbon material satisfies d₁ ≥ d₂, optionally d₁ > d₂. The larger interlayer spacing of the external region of the carbon material is more conducive to the rapid intercalation and deintercalation of active ions, thereby further improving the dynamic performances of secondary batteries; the less interlayer spacing in the internal region of the carbon material is more conducive to improving the specific capacity and compaction density of the carbon material, thereby further enhancing the energy density of secondary batteries.

In some embodiments, d₁ is from 0.33565 nm to 0.33610 nm.

In some embodiments, d₂ is from 0.33557 nm to 0.33585 nm.

In some embodiments of the present application, the carbon material has a graphitization degree of 94%-98%, optionally 95%-97%. The graphitization degree of the carbon material within the above range is conducive to improving the energy density of secondary batteries, and also improving the cycle performance, storage performance and/or rate performance of secondary batteries.

In some embodiments of the present application, the carbon material has La(110) of 100 nm-150 nm, optionally 110 nm-130 nm.

In some embodiments of the present application, the carbon material has Lc(002) of 20nm-45nm, optionally 28nm-40nm.

When the La(110) and/or the Lc(002) of the carbon material is within a suitable range, it is favorable for the carbon material to have a higher degree of crystallinity and/or graphitization, which is conducive to enhancing the specific capacity of the carbon material, and also enhancing the transport performance of active ions and electrons of the negative electrode film layer, which is in turn conducive to enhancing the cycle performance, storage performance and/or rate performance of secondary batteries.

In some embodiments of the present application, the carbon material has a volume distribution particle size Dv50 of from 8.0 µm to 24.0 µm, optionally from 9.5 µm to 22.5 µm.

In some embodiments of the present application, the carbon material has a volume distribution particle size Dv10 of from 5.0 µm to 15.0 µm, optionally from 6.0 µm to 14.0 µm.

In some embodiments of the present application, the carbon material has a volume distribution particle size Dv90 of from 16.0 µm to 35.0 µm, optionally from 17.0 µm to 34.0 µm.

The volume distribution particle sizes Dv10, Dv50 and/or Dv90 of carbon materials within the above range is beneficial to improving the transport performance of active ions and electrons, and also forming a reasonable channel structure among particles of the negative electrode film layer, thereby further improving the cycle and/or rate performances of secondary batteries.

In some embodiments of the present application, the carbon material has (Dv90-Dv10)/Dv50 of from 0.55 to 1.55, optionally from 0.8 to 1.4. When the carbon material has (Dv90-Dv10)/Dv50 within the above range, its particle packing performance is better, which is conducive to enhancing the compaction density of the negative electrode film layer, and thus further enhancing the energy density of secondary batteries. In addition, it is also possible to form a reasonable channel structure among particles of the negative electrode film layer.

In some embodiments of the present application, the carbon material has a tap density of from 0.8g/cm³ to 1.32g/cm³, optionally from 0.82g/cm³ to 1.28g/cm³. When the tap density of the carbon material is within the above range, the compaction density of the negative electrode plate can be increased, thereby increasing the energy density of secondary batteries. Moreover, it is possible to form a reasonable channel structure among particles of the negative electrode film layer, to enhance the transport performance of active ions and electrons, and to improve the cycle and storage performances of secondary batteries.

In some embodiments of the present application, the carbon material has a specific capacity of from 355mAh/g to 371mAh/g, optionally from 360mAh/g to 370mAh/g. When the specific capacity of the carbon material is within the above range, the energy density of secondary batteries can be improved.

In some embodiments of the present application, the carbon material has a morphology comprising one or more of blocky, spherical, and quasi-spherical shapes.

A second aspect of the present application provides a method for preparing a carbon material, comprising the following steps: Step 1, providing a raw material having multiple pore structures; Step 2, mixing the raw material with a filling material in a predetermined ratio homogeneously, and then holding it at a first temperature T₁ for a first time t₁ to obtain an intermediate; Step 3, holding the obtained intermediate at a second temperature T₂ for a second time t₂ to obtain a carbon material, wherein the carbon material comprises a pore structure, an adsorption amount of linseed kernel oil to 100g of the carbon material is denoted as A in ml, a specific surface area of the carbon material is denoted as B in m²/g and the carbon material satisfies: 36 ≤ A×B ≤ 75.

In some embodiments of the present application, the raw material includes natural graphite, optionally the natural graphite includes one or more of flake graphite, natural spherical graphite, and microcrystalline graphite.

In some embodiments of the present application, the raw material has a volume distribution particle size Dv50 of from 8.5 µm to 24.0 µm, optionally from 10.5 µm to 22.5 µm.

In some embodiments of the present application, the raw material has an ash content of ≤ 1 wt%. The raw material having a lower ash content facilitates the carbon material to have lower surface defects.

In some embodiments of the present application, the filling material has a softening point of from 110°C to 175°C, optionally from 120°C to 170°C. The softening point of the filling material within the above range is favorable to enable the carbon material to have a suitable adsorption amount of linseed kernel oil and/or a suitable specific surface area, is favorable to enable the A×B of the carbon material within a suitable range and is also favorable to regulate the size of the pores and/or the number of pores in the external region and the internal region of the carbon material within a suitable range and to regulate S₂/S₁ within a suitable range.

In some embodiments of the present application, the filling material has a coking value of 26%-50%, optionally 33%-45%. The coking value of the filling material within the above range is favorable to enable the carbon material to have a suitable adsorption amount A of linseed kernel oil and/or a suitable specific surface area B, is favorable to enable the A×B of the carbon material within a suitable range and is also favorable to regulate the size of the pores and/or the number of pores in the external region and the internal region of the carbon material within a suitable range and to regulate S₂/S₁ within a suitable range.

In some embodiments of the present application, the filling material has a volume distribution particle size Dv50 of less than or equal to 6 µm, optionally from 1 µm to 5 µm. As a result, it is possible to enable the filling material to be filled into the pore structure of the raw material after being heated and melted, and also to improve the dispersion uniformity of the filling material and the raw material.

In some embodiments of the present application, the filling material has a quinoline insoluble matter in a content of ≤ 1 wt%, optionally ≤ 0.8 wt%.

In some embodiments of the present application, the filling material comprises one or more of coal asphalt and petroleum asphalt.

In some embodiments of the present application, a mass ratio of the filling material to the raw material is (10-32): 100, optionally (10-25): 100. As a result, it is favorable to enable the carbon material to have a suitable adsorption amount A of linseed kernel oil and/or a suitable specific surface area B, it is favorable to enable the A×B of the carbon material within a suitable range and it is also favorable to regulate the size of the pores and/or the number of pores in the external region and the internal region of the carbon material within a suitable range and to regulate S₂/S₁ within a suitable range.

In some embodiments of the present application, after mixing the raw material and filling material in a predetermined ratio homogeneously, the resulting mixture is heated to the first temperature T₁ by a staged heating process, optionally including a first heating process, a second heating process and a third heating process.

In some embodiments of the present application, the first heating process is carried out by heating it to a temperature of from 200°C to 250°C and holding it at the temperature for 0.5 to 2 hours.

In some embodiments of the present application, the second heating process is carried out by heating it to a temperature of from 450°C to 550°C and holding it at the temperature for 0.5 to 2 hours.

In some embodiments of the present application, the third heating process is carried out by heating it to the first temperature T₁ and holding it at the first temperature T₁ for a first time t₁.

In some embodiments of the present application, it is heated to the first temperature T₁ at a rate of 1°C/min-10°C/min, optionally 1.5°C/min-8°C/min.

In some embodiments of the present application, the first temperature T₁ is from 700°C to 1100°C, optionally from 750 to 1100°C.

In some embodiments of the present application, the first time t₁ is from 0.5 hour to 5 hours, optionally from 0.5 hours to 3 hours.

By adjusting one or more of the factors such as the heating rate, the first temperature, the first time, and the heating process to be within the above ranges, it is beneficial to obtaining the desired carbon material. For example, it is favorable to enable the carbon material to have a suitable adsorption amount A of linseed kernel oil and/or a suitable specific surface area B, it is favorable to enable the A×B of the carbon material within a suitable range and it is also favorable to regulate the size of the pores and/or the number of pores in the external region and the internal region of the carbon material within a suitable range and to regulate S₂/S₁ within a suitable range.

In some embodiments of the present application, the second temperature T₂ is from 1920°C to 2520°C, optionally from 2050°C to 2400°C.

In some embodiments of the present application, the second time t₂ is from 1h to 6h, optionally from 2h to 5h.

By adjusting the second temperature and/or the second time to be within the above range is favorable to reduce the content of disordered carbon in the carbon material, and is also favorable to enable the carbon material to have a suitable adsorption amount A of linseed kernel oil and/or a suitable specific surface area B and to enable the A×B of the carbon material within a suitable range

A third aspect of the present application provides a secondary battery, comprising a negative electrode plate comprising the carbon material according to the first aspect of the present application or the carbon material prepared by the method according to the second aspect of the present application.

A fourth aspect of the present application provides an electrical device, comprising the secondary battery according to the third aspect of the present application.

The electrical device of the present application includes the secondary battery provided in the present application and thus has at least the same advantages as the secondary battery.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
FIG. 1 is a schematic diagram of a cross-sectional image of a particle of a carbon material of the present application.
FIG. 2 is a schematic diagram of a secondary battery according to an embodiment of the present application.
FIG. 3 is an exploded view of a secondary battery according to the embodiment of the present application.
FIG. 4 is a schematic diagram of a battery module according to an embodiment of the present application.
FIG. 5 is a schematic diagram of a battery pack according to an embodiment of the present application.
FIG. 6 is an exploded view of the battery pack according to the embodiment of the present application as shown in FIG. 5.
FIG. 7 is a schematic diagram of an electrical device according to an embodiment of the present application using the secondary battery of the present application as power.

The drawings are not drawn to actual scale. Reference numerals are as follows: 1. Battery pack; 2. Upper box body; 3. Lower box body; 4. Battery module; 5. Secondary battery; 51. Casing; 52. Electrode assembly; 53. Cover plate; 100. Carbon material; 101. External region; 102. Internal region.

### DETAILED DESCRIPTION

Hereinafter, embodiments of a carbon material, a method for preparing the same, and a secondary battery and an electrical device comprising the same according to the present application will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise/comprising", "include/including", and "contain/containing" mentioned in the present application mean that it is drafted in an open mode, or it may also mean a close mode. For example, the transition phases "comprise/comprising", "include/including", and "contain/containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

Unless stated otherwise, the terms used in the present application have the well-known meanings commonly understood by those skilled in the art.

Unless stated otherwise, the values of the parameters mentioned in the present application may be determined by various test methods commonly used in the art, for example, according to the test methods given in the present application.

Unless stated otherwise, in the present application, the term "active ions" refers to ions, including but not limited to lithium ions, that can be intercalated and deintercalated back and forth between the positive electrode and the negative electrode of the secondary battery.

In the present application herein, the terms "multiple" and "more than one" mean two or more, unless otherwise stated and specifically limited.

According to different preparation processes or sources, graphite can be divided into artificial graphite and natural graphite. The artificial graphite generally is prepared by a high temperature graphitization process, resulting in high energy consumption and high cost. Thus, the artificial graphite has a higher cost. Natural graphite originates from nature and thus has the advantage of relatively low cost. In addition, natural graphite has the advantages of high capacity.

Natural graphite mainly includes flake graphite, natural spherical graphite, and microcrystalline graphite. Unlike artificial graphite, natural graphite particles have a lot of pores and defects in the inside and the outside of the particles. During the first charging process of the secondary battery, there are many side reactions between the electrolyte and the pores on the surface and inside the particles, resulting in high irreversible capacity loss, low initial columbic efficiency, poor cycle performance and storage performance of the secondary battery. Specifically, flake graphite and natural spherical graphite have high crystallinity and graphitization degree, and have mostly layered microstructure. Such structure leads to significant volume changes in natural graphite during the intercalation and deintercalation of active ions, which is likely to cause the breakage of graphite layered structure and particles. After the breakage of particles, the exposed fresh surface will continue to react with the electrolyte, which will further increase the irreversible capacity loss of the secondary battery.

At present, the performance of natural graphite is mainly improved through particle surface cladding treatment and/or particle internal filling treatment.

The cladding treatment of particle surfaces mainly involves mixing natural graphite and a cladding agent (such as asphalt and polymer compounds) evenly before heat treatment to cover the surface of natural graphite particles with a layer of carbon, which can slightly repair the defects on the particles surface. However, the inventors of the present application found during the research process that the amorphous carbon surface cladding layer can lead to a decrease in the specific capacity and/or compaction density of natural graphite, affecting the energy density of secondary batteries. At the same time, the surface of the particles after being clad with an amorphous carbon layer still has a high number of defects; moreover, the amorphous carbon surface cladding layer cannot effectively prevent the electrolytic solution from infiltrating into the pore structure inside the particles, resulting in limited improvement in the initial columbic efficiency, cycle performance and/or storage performance of the secondary battery.

The filling treatment inside the particles mainly involves mixing natural graphite with filling agents (such as asphalt, polymer compounds, etc.), and filling the filling agent into the internal pores of particles through preset pressure, vacuuming, and heating, so as to obtain natural graphite without pores inside the particles. However, the inventors of the present application have found during the research that the large amount of carbon, especially soft carbon, inside the particles leads to a decrease in the specific capacity of natural graphite, which affects the energy density of secondary batteries. At the same time, because all the pores inside the natural graphite particles are filled with carbon, the volume of natural graphite changes greatly during the intercalation and deintercalation of active ions, which will render the particles more prone to breaking out and further lead to repeated destruction and reconstruction of the SEI film on the surface of the particles; as a result, the consumption of active ions increases, the irreversible capacity loss of secondary batteries increases, and the service life of secondary batteries becomes short. In the existing technologies, the surface of natural graphite, without any pores inside the particles thereof, will be clad with a layer of amorphous carbon, which will lead to further decrease in the specific capacity and/or compaction density of natural graphite, and in this case, there are still many defects on the surface of the particles, and thus the service life of secondary batteries cannot be effectively improved.

Therefore, the irreversible capacity loss of secondary batteries are reduced and the initial columbic efficiency of secondary batteries is increased to some extent by means of the surface cladding treatment and/or internal filling treatment to modify natural graphite particles. Nevertheless, the improvement on the initial columbic efficiency of secondary batteries is limited and the energy density of secondary batteries will lose. In addition, the capacity exertion characteristics of the secondary battery during long-term cycle and storage remains poor.

In view of this, the inventors of the present application have proposed, after extensive research, a new type of carbon material, which combines high specific capacity, and high initial Coulombic efficiency, and also enables secondary batteries to have high initial Coulombic efficiency, high energy density, and good cycle performance and storage performance.

### Carbon Material

In the first aspect, the present application provides a carbon material.

The carbon material comprises a pore structure, an adsorption amount of linseed kernel oil to 100g of the carbon material 100 g of the carbon material is denoted as A in ml, a specific surface area of the carbon material is denoted as B in m²/g and the carbon material satisfies: 36 ≤ A×B ≤ 75.

The inventors of the present application have found during the research that when the carbon material satisfies 36 ≤ A × B ≤ 75, it enables secondary batteries to combine high initial Coulombic efficiency, high energy density, and good cycle performance and storage performance for the following reasons.

Firstly, the surface of particles of such carbon material is denser, whereby the carbon material particles can be made to have a more stable structure, and electrolyte penetration into the pore structure inside the carbon material particles can be avoided as much as possible, thereby reducing the occurrence of side reactions, reducing the consumption of active ions for the formation of the SEI film inside the particles, and thus enhancing the initial Coulombic efficiency of the carbon material and further improving the cycle performance and the storage performance of secondary batteries.

Secondly, there are fewer defects on the surface of particle of such carbon material, whereby the particles have a weaker adsorption capacity on oily substances, and thus is conducive to reducing side reactions of batteries.

Thirdly, particles of such carbon material also enable the negative electrode film layer to form a reasonable pore structure, and thus improve infiltration of an electrolytic solution into the negative electrode plate.

Therefore, the carbon material provided in the present application can effectively reduce the irreversible capacity loss of the secondary battery, improve the capacity exertion characteristics of the secondary battery, and enable the secondary battery to have high initial Coulombic efficiency, high energy density, and good cycle performance and storage performance.

When A × B is less than 36, the adsorption amount of linseed kernel oil to the carbon material may be smaller and/or the specific surface area of the carbon material may be smaller. When the adsorption amount of linseed kernel oil to the carbon material is smaller, the carbon material has a high degree of densification on its surface structure, which may make the volume change of the carbon material particles during deintercalation and intercalation of active ions. At that instance, the particles are more prone to breaking out, which further lead to repeated destruction and reconstruction of the SEI film on the surface of the particles. As a result, the consumption of active ions increases, the irreversible capacity loss of secondary batteries increases, and the service life of secondary batteries becomes short. When the specific surface area of the carbon material is smaller, it may be unfavorable to the transport of active ions, and thus may affect the capacity exertion, cycle performance and/or multiplication performance of secondary batteries.

When A × B is greater than 75, the adsorption amount of linseed kernel oil to the carbon material may be larger and/or the specific surface area of the carbon material may be larger. When the adsorption amount of linseed kernel oil to the carbon material is larger, the carbon material particles have more surface defects and/or pore structure, whereby more electrolyte side reactions occur, and more active ions are consumed by the SEI film formation, which reduces the initial Coulombic efficiency of secondary batteries. Meanwhile, with the increase in the charging and discharging number of the secondary batteries, the thickness of the SEI film on the surface of the carbon material particles is increasing, which also affects the cycle performance and/or rate performance of the secondary batteries. When the specific surface area of the carbon material is larger, the activity of side reactions on the surface of the carbon material particles is high, and more active ions are consumed by the SEI film formation, which reduces the initial Coulombic efficiency of secondary batteries and affects the storage performance of secondary batteries.

In some embodiments of the present application, 38 ≤ A×B ≤ 65, optionally, 38 ≤ A×B ≤ 60, 39 ≤ A×B ≤ 55, 39 ≤ A×B ≤ 52, 39 ≤ A×B ≤ 50. The inventors have found through further research that when A×B further satisfies the above range, the secondary battery can better combine the high initial columbic efficiency, high energy density and good cycle performance and storage performance.

In some embodiments of the present application, the adsorption amount of linseed kernel oil to 100g of the carbon material is from 30 mL to 50 mL, optionally of 35 mL to 47 mL. When the adsorption amount of the linseed kernel oil to the carbon material is within the above range, particles of the carbon material have less surface side reaction activity, thereby reducing consumption of active ions due to the formation of the SEI film, and avoiding the surface of the particles from becoming too dense, which would affect transport of active ions; furthermore, it is possible to form a reasonable channel structure among the particles of the negative electrode film layer, thereby improving infiltration of an electrolytic solution into the negative electrode plate. As a result, the adsorption amount of the linseed kernel oil to the carbon material within the above range enables the secondary batteries to combine high initial Coulombic efficiency, high energy density and good cycle performance and storage performance.

In some embodiments of the present application, the carbon material has the specific surface area B of 0.5 m²/g to 2.1 m²/g, optionally from 0.7 m²/g to 1.8 m²/g, from 0.9m²/g to 1.8m²/g, from 1.0m²/g to 1.8m²/g, from 1.0m²/g to 1.7m²/g and from 1.0m²/g to 1.6m²/g. When the specific surface area of the carbon material is within the above range, on the one hand, the carbon material can have less surface side reaction activity, thereby reducing consumption of active ions due to the formation of the SEI film, and enhancing the initial Coulombic efficiency of the carbon material; on the other hand, the carbon material can have higher active ion transport performance. As a result, the specific surface area of the carbon material within the above range enables the secondary batteries to combine high initial Coulombic efficiency, high energy density and good cycle performance and storage performance and further enables the secondary batteries to have good rate performance.

The specific surface area of a carbon material has a meaning known in the art, and can be measured by instruments and methods known in the art. For example, the specific surface area may be tested by a nitrogen adsorption specific surface area analysis test method with reference to GB/T 19587-2017, and calculated by a BET (Brunauer Emmett Teller) method. The nitrogen adsorption specific surface area analysis test may be performed by a Tri-Star 3020 specific surface area pore size analysis tester from Micromeritics, USA.

The adsorption amount A of linseed kernel oil to 100g of the carbon material can be tested according to the following method: with reference to GB/T 3780.2-2017, weigh a certain mass (e.g., 20g) of dried test samples, place the weighed samples in the mixing chamber of the absorptometer, with the temperature of the mixing chamber at 23°C, and put the lid on; align the mouth of the oil delivery tube of the constant-velocity buret tube with the mouth of the lid of the mixing chamber above the orifice; and start the absorptometer, then the instrument starts to run and drop linseed kernel oil, with the increase of the oil absorption of the sample, the mixture from the free-flow state into a semi-plastic agglomerate, and the viscosity of the mixture is increasing, and is transmitted to the torque sensor system of the absorptometer; when the drop of oil make the semi-plastic agglomerate reach the preset torque level, the absorptometer and the constant-speed burette are automatically turned off; the value corresponding to 70% of the maximum torque of the fitted curve is read, and the adsorption amount A of linseed kernel oil to 100 g of the carbon material is calculated and obtained using the formula A = (V/m) × 100, in which V represents the volume of linseed kernel oil consumed by the corresponding sample at 70% of the maximum torque in ml, and m is the mass of the added sample in g.

In some embodiments of the present application, the carbon material comprises more than one pore structure having a pore area greater than or equal to 0.1 µm², optionally more than one pore structure having a pore area of 0.12 µm² to 2.5 µm². When the carbon material further comprises the pore structure having the pore area as described above, the pore structure can reserve a required expansion space for the volume change of particles of carbon material, whereby the risk of the carbon material particles breaking up to create a new interface can be further reduced, which in turn can reduce occurrence of a side reaction, reduce irreversible loss of capacity of the secondary battery, and further improve cycle performance and storage performance of the secondary battery.

In some embodiments of the present application, the carbon material comprises an external region and an internal region disposed on the inside of the external region, the external region being a region formed extending from a distance of 0.25 L from the surface of the particles of the carbon material towards the interior of the particles, L being a short-axis length of the particles of the carbon material; total pore area of the external region being denoted as S₁ and total pore area of the internal region being denoted as S₂, and S₂ > S₁.

In the present application, the total pore area S₁ of the external region and the total pore area S₂ of the internal region of the carbon material can be obtained by testing a cross-sectional image of the carbon material.

In the present application, the cross-sectional image of the carbon material includes a cross-sectional image passing through a particle center of the carbon material. "Particle center" means an area within a radius of 0.1 µm extending from a geometric center of the particle toward the surface of the particle.

In the present application, the short axis length of the particle is the minimum value when a line connecting two points on the surface of the particle passes through the geometric center of the particle.

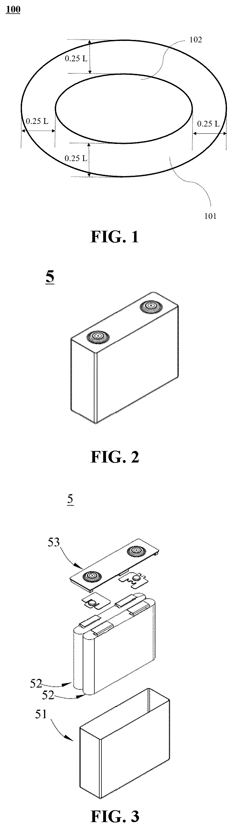

FIG. 1 is a schematic diagram of a cross-sectional image of a particle of the carbon material 100 of the present application, and the cross-sectional image passes through the particle center of the carbon material 100. As shown in FIG. 1, L denotes a short-axis length of a particle of the carbon material 100, and a region formed for a distance of 0.25 L extending from the surface of the particle of the carbon material 100 toward the interior of the particle is the external region 101, and the region inside the external region 101 is the internal region 102.

A cross-section of the carbon material can be prepared using a cross section polisher (e.g., an argon ion Cross Section Polisher IB-09010 CP from JEOL Company of Japan); the cross-section of the carbon material is then scanned using a scanning electron microscope (e.g., a Sigma 300 scanning electron microscope from e ZEISS Company of Germany) with reference to JY/T010-1996; and the cross-section of the carbon material is finally scanned by an image processing software (e.g., AVIZO) to calculate the total pore area S₁ of the external region and the total pore area S₂ of the internal region of the carbon material.

When the carbon material further satisfies S₂ > S₁, the carbon material is further characterized by: a large number of pores and/or a large pore size in the internal region and a small number of pores and/or a small pore size in the external region. When the carbon material has a large number of pores and/or a large pore size in the internal region, the pore structure may provide a desired reserved expansion space for the volume change of the carbon material particles, thereby reducing the risk of the carbon material particles breaking out to create new interfaces, reducing the occurrence of side reactions, reducing the irreversible capacity loss of the secondary battery, and improving the cycle performance and/or storage performance of secondary batteries. When the carbon material has a small number of pores and/or a small pore size in the external region, it is possible to enable the carbon material particles to have a less surface defect and a more stable structure, and to avoid an electrolytic solution to infiltrate into the pore structure inside the carbon material particles as much as possible, thereby reducing the side reactions and reducing the consumption of active ions by SEI film formation inside the carbon material particles and thus improving the initial columbic efficiency and further improving the cycle performance and storage performance of secondary batteries. Thus, when the carbon material further satisfies S₂ > S₁, it is possible to effectively reduce the irreversible capacity loss of secondary batteries, improve the capacity exertion characteristics and enable the secondary batteries to combine high initial Coulombic efficiency, high energy density, and good cycle performance and storage performance well.

In some embodiments, 1.3 ≤S₂/St ≤ 450, 1.8 ≤S₂/S₁ ≤ 400, 2.0 ≤S₂/St ≤ 300, 2.5 ≤S₂/St ≤ 200, and 3.0 ≤S₂/St ≤ 150. The inventors found in further research that when S₂/S₁ further satisfies the above ranges, it is possible to enable the secondary batteries to combine high initial Coulombic efficiency, high energy density, and good cycle performance and storage performance well.

In some embodiments of the present application, 0.01µm² ≤ S₁ ≤ 12.0µm², optionally 0.02µm² ≤ S₁ ≤ 10.0µm², 0.02µm² ≤ S₁ ≤ 8.0µm², 0.02µm² ≤ S₁ ≤ 7.0µm², 0.1µm² ≤ S₁ ≤ 10.0µm², and 0.1µm² ≤ S₁ ≤ 7.0µm². When the total pore area of the external region is within the above range, on the one hand, the carbon material particles can have a less surface defect and a more stable structure, avoiding an electrolytic solution to infiltrate into the pore structure inside the carbon material particles as much as possible, thereby reducing the side reactions and reducing the consumption of active ions by SEI film formation inside the carbon material particles. On the other hand, the transport performance of active ions and electrons will not be affected.

In some embodiments of the present application, 2.5µm² ≤ S₂ ≤ 25.0µm², optionally 3.0µm² ≤ S₂ ≤ 22.5µm², 3.0µm² ≤ S₂ ≤ 20.5µm², and 4.0µm² ≤ S₂ ≤ 17.5µm². When the total pore area of the internal region is within the above range, on the one hand, sufficient and stable expansion space can be reserved for the volume change of the carbon material particles, thereby reducing the risk of the carbon material particle breaking out to generate new interfaces, reducing the side reactions on the new interface surface, and reducing the consumption of active ions by SEI film formation on the new interface surface. On the other hand, the capacity and initial columbic efficiency of carbon materials can be improved.

In some embodiments, L ≥ 4 µm, optionally, 4 µm ≤ L ≤ 20 µm, 6 µm ≤ L ≤ 18 µm, 8 µm ≤ L ≤ 18 µm, and 8 µm ≤ L ≤ 16 µm.

In some embodiments, the pore structure in the external region of the carbon material has an area of less than or equal to 0.2 µm², optionally less than or equal to 0.15 µm². The inventors found during the further research that by controlling the area of the pore structure in the external region of the carbon material within the above range, the external region of the carbon material can be made to have a denser structure, whereby it is possible to effectively reduce the surface defects on the surface of the carbon material and to improve the structural stability of the carbon material so as to avoid the penetration of the electrolyte into the pore structure inside the particles of the carbon material as much as possible, which can then further improve the cycle performance and storage performance of secondary batteries. Of course, the present application does not intend to limit that all of the pore structures in the external region of the carbon material have an area of less than or equal to 0.2 µm², for example, more than 95%, optionally more than 99%, of the pore structures can be controlled to have an area of less than or equal to 0.2 µm², optionally less than or equal to 0.15µm².

In some embodiments, the internal region of the carbon material includes more than one pore structure having an area of greater than or equal to 0.15 µm², optionally includes more than one pore structure having an area of from 0.18 µm² to 2.5 µm². The inventors found during the further research that by including the pore structure with the above mentioned size in the internal region of the carbon material, on the one hand sufficient and stable expansion space can be reserved for the volume change of the carbon material particles, thereby reducing the risk of the carbon material particles breaking out, and on the other hand, the compaction density of the carbon material can be improved.

In some embodiments, the interlayer spacing of the external region of the carbon material is denoted as d₁, the interlayer spacing of the internal region of the carbon material is denoted as d₂, and the carbon material satisfies d₁ ≥ d₂, optionally d₁ > d₂.

A larger interlayer spacing of the external region of the carbon material is more conducive to the rapid intercalation and deintercalation of active ions, thereby further improving the dynamic performances of secondary batteries. A smaller interlayer spacing in the internal region of the carbon material is conducive to improving the specific capacity and compaction density of the carbon material, thereby further enhancing the energy density of secondary batteries.

In some embodiments, d₁ is from 0.33565 nm to 0.33610 nm.

In some embodiments, d₂ is from 0.33557 nm to 0.33585 nm.

The interlayer spacing of different regions of carbon materials can be tested using instruments and methods known in the art. For example, High-Resolution Transmission Electron Microscopy (HRTEM) can be used for testing. The test instrument may be Spectra S/TEM Scanning Transmission Electron Microscope from Thermo Fisher Scientific.

In some embodiments of the present application, the carbon material has La(110) of 100 nm-150 nm, optionally 110 nm-130 nm.

In some embodiments of the present application, the carbon material has Lc(002) of 20nm-45nm, optionally 28nm-40nm.

When the La(110) and/or the Lc(002) of the carbon material is within a suitable range, it is favorable for the carbon material to have a higher degree of crystallinity and/or graphitization, which is conducive to enhancing the specific capacity of the carbon material, and also enhancing the transport performance of active ions and electrons of the negative electrode film layer, which is in turn conducive to enhancing the cycle performance, storage performance and/or rate performance of secondary batteries.

La(110) denotes a microcrystalline size along the a-axis in the (110) crystal plane of the carbon material, and Lc(002) denotes a microcrystalline size along the c-axis in the (002) crystal plane of the carbon material, which may be tested using instruments and methods known in the art. For example, an X-ray diffractometer (e.g., a Bruker D8 Discover) may be used for the test with reference to JIS K 0131-1996, and JB/T 4220-2011, to obtain the peak intensity and full width at half-maximum (FWHM) of the diffraction peak corresponding to the (110) crystal plane of the carbon material, the peak intensity and full width at half-maximum (FWHM) of the diffraction peak corresponding to the (002) crystal plane and then the results are calculated according to Scheller's formula.

In some embodiments of the present application, the carbon material has a graphitization degree of from 94% to 98%, optionally from 95% to 97%. The graphitization degree of carbon materials within the above range is beneficial to improve energy density of secondary batteries and further improve cycle performance, storage performance, and/or rate performance of secondary batteries.

The graphitization degree of the carbon material has the meaning known in the art, and can be tested by instruments and methods known in the art. For example, the graphitization degree may be tested by an X-ray diffractometer (such as Bruker D8 Discover) with reference to JIS K 0131-1996 and JB/T 4220-2011 to obtain the average interplanar spacing d₀₀₂ of C(002) crystal planes in the crystalline structure of the carbon material, and then calculated according to the formula g = (0.344 - d₀₀₂)/(0.344 - 0.3354)×100%. In the above formula, d₀₀₂ is an average interplanar spacing of the (002) crystal plane in the crystalline structure of the carbon material, expressed in nanometers (nm).

In some embodiments, the morphology of the carbon material includes one or more of blocky, spherical, and quasi-spherical shapes. As a result, it is possible to improve the compaction density of the negative electrode plate, thereby enhancing the energy density of the secondary battery.

In some embodiments, the carbon material comprises primary particles, and the quantity proportion of the primary particles in the carbon material is greater than or equal to 50%, for example, 55%-95%, 60%-100%, 65%-90%, 65%-80%, 70%-100%, 75%-90%, 80%-100%, 90%-100%, or 95%-100%. When the carbon material comprises an appropriate proportion of primary particles, it is possible to enable it to have high structural stability and reduce the occurrence of side reactions, and in addition, it is possible to enhance the compaction density of the negative electrode film, thereby enhancing the energy density of secondary batteries.

In some embodiments, all the carbon materials may be primary particles, i.e., the quantity proportion of the primary particles in the carbon materials is 100%.

In the present application, both primary particles and secondary particles have meanings well known in the art. Primary particles are particles in a non-agglomerated state. Secondary particles are particles in an agglomerated state formed by the aggregation of two or more primary particles. Primary particles and secondary particles can be distinguished by using scanning electron microscope (SEM) images.

In the present application, the quantity proportion of primary particles in the carbon material refers to the average of statistical results obtained by: taking randomly a test sample from the negative electrode film, taking randomly a plurality of test areas in the test sample, obtaining images of the plurality of test areas using a scanning electron microscope, and counting the proportion of the number of primary particles in the carbon material in each image to the total number of particles in the carbon material to obtain the average of the plurality of statistical results as the quantity proportion of primary particles in the carbon material.

In some embodiments, the carbon material has a volume distribution particle size Dv50 of from 8.0 µm to 24.0 µm, optionally from 9.5 µm to 22.5 µm.

In some embodiments, the carbon material has a volume distribution particle size Dv10 of from 5.0 µm to 15.0 µm, optionally from 6.0 µm to 14.0 µm.

In some embodiments, the carbon material has a volume distribution particle size Dv90 of from 16.0 µm to 35.0 µm, optionally from 17.0 µm to 34.0 µm.

When the volume distribution particle sizes Dv10, Dv50 and Dv90 of carbon materials are within the above range, it is possible to improve the transport performance of active ions and electrons, and to form a reasonable channel structure among particles of the negative electrode film layer, thereby further improving the cycle and/or rate performances of secondary batteries.

In some embodiments, the carbon material has (Dv90-Dv10)/Dv50 of from 0.55 to 1.55, optionally from 0.8 to 1.4. When the (Dv90-Dv10)/Dv50 of the carbon material is within the above range, it has a better particles packing property, which is conductive to improving the compaction density of a negative electrode film layer, thereby further enhance the energy density of secondary batteries, further which is conducive to forming a reasonable channel structure among particles of the negative electrode film layer.

The volume distribution particle sizes Dv10, Dv50, and Dv90 of the carbon material have the meanings known in the art, which indicate the particle sizes corresponding to when the cumulative volume distribution percentage of the material reaches 10%, 50%, and 90%, respectively, and can be measured by instruments and methods known in the art. For example, it can be determined using a laser particle size analyzer with reference to GB/T 19077-2016. The testing instrument may be a Mastersizer 2000E laser particle size analyzer from Malvern Instruments Ltd. of the United Kingdom.

In some embodiments, the carbon material has a tap density of from 0.80g/cm³ to 1.32g/cm³, optionally from 0.82g/cm³ to 1.28g/cm³. When the tap density of the carbon material is within the above range, the compaction density of the negative electrode plate can be increased, thereby increasing the energy density of the secondary battery. Moreover, it is possible to form a reasonable channel structure among particles of the negative electrode film layer, to enhance the transport performance of active ions and electrons, and to improve the cycle and storage performances of secondary batteries.

The tap density of the carbon material has a meaning that is well known in the art, and can be determined using instruments and methods known in the art. For example, it can be determined using a powder tap density tester with reference to GB/T 5162-2006. The test instrument may be Dandong Baxter BT-301.

In some embodiments, the carbon material has a specific capacity of from 355mAh/g to 371 mAh/g, optionally from 360mAh/g to 370mAh/g. When the specific capacity of the carbon material is within the above range, the energy density of the secondary battery can be improved.

The specific capacity of the carbon material has a well-known meaning in the art, and can be tested using methods well-known in the art. The exemplary test method is as follows: a carbon material sample is mixed under stirring with styrene butadiene rubber (SBR) as a binder, sodium carboxymethyl cellulose (CMC) as a thickener, and carbon black as a conductive agent in a mass ratio of 96.2:1.8:1.2:0.8 in an appropriate amount of deionized water as a solvent, to form a uniform negative electrode slurry; the negative electrode slurry is applied evenly on the surface of copper foil as the negative electrode current collector, and is dried in an over for later use; ethylene carbonate (EC), methyl ethyl carbonate (EMC), and diethyl carbonate (DEC) are mixed in a volume ratio of 1:1:1 to obtain an organic solvent, and then LiPF₆ is dissolved in the aforementioned organic solvent to prepare an electrolytic solution with a concentration of 1mol/L; afterwards, a metal lithium plate is used as the counter electrode and polyethylene (PE) film is used as a separator, to assemble a CR2430 button battery in an glove box under argon protection; at 25°C, the prepared button battery is first discharged to 0.005V at a constant current of 0.15mA, after standing for 5 minutes, it is discharged to 0.005V at a constant current of 10 µA, then the discharging capacity at the 1^{st} cycle of the button battery is recorded; afterwards, the button battery is charged to 2.0V at a constant current of 0.3mA and the charging capacity is recorded. The ratio of the charging capacity of the button battery to the mass of the carbon material sample is the specific capacity of the carbon material.

### Preparation Method

A second aspect of the present application provides a method for preparing a carbon material, which may be used for preparing the carbon material according to the first aspect of the present application.

The method for preparing a carbon material comprises the following steps: Step 1, providing a raw material having multiple pore structures; Step 2, mixing the raw material with a filling material in a predetermined ratio homogeneously, and then holding it at a first temperature T₁ for a first time t₁ to obtain an intermediate; Step 3, holding the obtained intermediate at a second temperature T₂ for a second time t₂ to obtain a carbon material, wherein the carbon material wherein the carbon material comprises a pore structure, an adsorption amount of linseed kernel oil to 100g of the carbon material is denoted as A in ml, a specific surface area of the carbon material is denoted as B in m²/g and the carbon material satisfies: 36 ≤ A×B ≤ 75.

In some embodiments, the raw material for preparing the carbon material includes natural graphite. Optionally, the natural graphite includes one or more of flake graphite, natural spherical graphite, and microcrystalline graphite, optionally natural spherical graphite.

"Natural spherical graphite" refers to natural graphite having a spherical or spheroidal-like shape, and not all natural graphite particles are controlled to be ideally spherical. In some embodiments, the natural spherical graphite can be obtained by pre-treating the flake graphite to obtain the desired particle size and morphology, optionally the pre-treatment comprising processes such as crushing, grading, spheronization, purification, etc.

In some embodiments, the morphology of the raw material includes one or more of spherical and quasi-spherical shapes.

In some embodiments, the raw material has a volume distribution particle size Dv50 of from 8.5 µm to 24.0 µm, optionally from 10.5 µm to 22.5 µm.

By adjusting the particle size of the raw material within the above range, it is possible to reduce the agglomeration of the raw material in the subsequent preparation process, whereby it is possible to reduce the problems of increased surface defects on the surface of the carbon material particles and increased surface side-reaction sites due to the incorporation of the depolymerization process.

In some embodiments, the raw material has an ash content of ≤ 1 wt%. The raw material having a lower ash content facilitates the carbon material to have lower surface defects.

In some embodiments, the filling material has a softening point of from 110°C to 175°C. For example, the softening point of the filling material may be 110°C, 115°C, 120°C, 125°C, 130°C, 135°C, 140°C, 145°C, 150°C, 155°C, 160°C, 165°C, 170°C, 175°C or within a range consisting of any of the above values. Optionally, the filling material has a softening point of 120°C-170°C_{∘}

The inventor found during the research that the softening point of the filling material within the above range is favorable to enable the carbon material to have a suitable adsorption amount A of linseed kernel oil and/or a suitable specific surface area B, is favorable to enable the A×B of the carbon material within a suitable range and is also favorable to regulate the size of the pores and/or the number of pores in the external region and the internal region of the carbon material within a suitable range and to regulate S₂/S₁ within a suitable range. In addition, the following can also be avoided: when the softening point of the filling material is excessively high, the filling material is not easy to flow and fill into the pore structure of the raw material. As a result, the surface and internal defects of particles of the resulting carbon material cannot be effectively reduced, and the infiltration of electrolyte into the pore structure inside the resulting carbon material particles cannot be effectively blocked. In this instance, the adsorption amount A of linseed kernel oil to the carbon material and/or the specific surface area B of the carbon material are too large and the A×B of the carbon material is too large, thereby affecting the initial Coulombic efficiency, cycle performance and storage performance of secondary batteries. When the softening point of the filling material is excessively low, the filling material contains more small molecules, and these small molecules are easy to volatilize when heated. As a result, although the filling material is easy to flow and fill into the pore structure of the raw material, the small molecules in the filling material volatilize when heat treatment is carried out at an elevated temperature, which leads to the fact that the actual residual carbon in the filling region is not able to fill in the pore structure of the raw material efficiently, and the effective filling effect is not achieved or the actual residual carbon in the filling area has more pore structures. In this instance, there are more surface defects on the surface of the carbon material particles, the adsorption amount A of linseed kernel oil to the carbon material and/or the specific surface area B of the carbon material are too large and the A×B of the carbon material is too large, thereby failing to reduce the consumption of active ions by the SEI film formation and reduce the irreversible capacity loss of secondary batteries, and also negatively affecting the cycle performance and storage performance of secondary batteries.

In some embodiments, the filling material has a coking value of from 26% to 50%, optionally from 33% to 45%. The inventor found during the research that when the coking value of the filling material is within the above range, it is possible to enable the carbon material to have a suitable adsorption amount A of linseed kernel oil and/or a suitable specific surface area B, to enable the A×B of the carbon material within a suitable range, to regulate the size of the pores and/or the number of pores in the external region and the internal region of the carbon material within a suitable range and to regulate S₂/S₁ within a suitable range.

In the present application, the coking value of the filling material has a meaning known in the art and can be determined by instruments and methods known in the art. For example, it can be determined with reference to GB/T 8727-2008.

In some embodiments, the filling material has a softening point of from 120°C to 170°C and a coking value of from 33% to 45%.

In some embodiments, the filling material has a volume distribution particle size Dv50 of less than or equal to 6 µm, optionally from 1µm to 6µm, from 1µm to 5µm, from 2µm to 5µm, or from 3µm to 5µm, thereby facilitating the filling of the filling material into the pore structure of the raw material after being heated and melted, and also facilitating the improvement of the dispersion uniformity of the filling material and the raw material.

In some embodiments, the filling material has a quinoline insoluble matter in a content of ≤ 1 wt%, optionally ≤ 0.8 wt%. When the content of quinoline insoluble mateiral is high, the atomic arrangement of actual residual carbon in the filling region will be affected and then the powder compaction density of the carbon material and the energy density of the secondary batteries are also affected.

In some embodiments, the filling material comprises one or more of coal asphalt and petroleum asphalt.

In some embodiments of the present application, a mass ratio of the filling material to the raw material is (10-32):100, optionally(10-25):100, (11-22):100, and (11-20):100. This is favorable to enable the carbon material to have a suitable adsorption amount A of linseed kernel oil and/or a suitable specific surface area B, to enable the A×B of the carbon material within a suitable range, and also to regulate the size of the pores and/or the number of pores in the external region and the internal region of the carbon material within a suitable range and to regulate S₂/S₁ within a suitable range. In addition, the following can also be avoided: when the mass ratio of the filling material to the raw material is too low, the filling material is not easy to flow and fill into the pore structure of the raw material. As a result, the internal defects of particles of the resulting carbon material cannot be effectively reduced, and the infiltration of electrolyte into the pore structure inside the resulting carbon material particles cannot be effectively blocked. In this instance, the adsorption amount A of linseed kernel oil to the carbon material and/or the specific surface area B of the carbon material will be larger and the A×B of the carbon material will be larger, thereby affecting the initial Coulombic efficiency, cycle performance and storage performance of secondary batteries. When the mass ratio of the filling material to the raw material is excessively large, it is easy to cause the internal pore structure of raw material to be completely filled. In this instance, the adsorption amount A of linseed kernel oil to the carbon material and/or the specific surface area B of the carbon material will be smaller and the A×B of the carbon material will be smaller. As a result, the resulting carbon material produces a larger volume change during deintercalation and intercalation of reactive ions, and the particles are more prone to break, the consumption of active ions by the SEI film formation increases, and the irreversible capacity loss of the secondary battery increases. In addition, when the mass ratio of filling material to raw material is excessively large, a large amount of filling material is left on the surface of the particles. In this instance, the particles are more likely to agglomerate, which not only increases the depolymerization process, but also reduces the specific capacity and compaction density of the obtained carbon material.

By adjusting one or more of parameters such as the type, the softening point, the coking value, and the addition amount of the filling material within the above range, it is favorable to enable the carbon material to have a suitable adsorption amount A of linseed kernel oil and/or a suitable specific surface area B, to enable the A×B of the carbon material within a suitable range, and also to regulate the size of the pores and/or the number of pores in the external region and the internal region of the carbon material within a suitable range and to regulate S₂/S₁ within a suitable range. In addition, the filling material, after being heated and melted, does not have a high viscosity, maintains good fluidity, and at the same time is not easy to bond the raw material particles, which is capable of reducing the agglomeration of the raw material particles in the subsequent preparation process. As a result, the problems such as an increase in the defects on the surface of the resulting carbon material particles and an increase in the number of side reaction sites and the like on the surface of the resulting carbon material particles due to the need for additional depolymerization processes can be reduced.

In some embodiments, in step 2, after mixing the raw material and filling material in a predetermined ratio homogeneously, it is heated to the first temperature T₁ by a staged heating process, optionally including a first heating process, a second heating process and a third heating process.

In some embodiments, the first heating process is carried out by heating it to a temperature of from 200°C to 250°C and holding it at this temperature for 0.5 to 2 hours.

The inventor found during the research that setting the holding time at this temperature within the above range is favorable to enable the carbon material to have a suitable adsorption amount A of linseed kernel oil and/or a suitable specific surface area B, to enable the A×B of the carbon material within a suitable range, and also to regulate the size of the pores and/or the number of pores in the external region and the internal region of the carbon material within a suitable range and to regulate S₂/S₁ within a suitable range. In addition, the following can also be avoided: when the holding time is too short, the filling material is not easy to flow and fill into the pore structure of the raw material and might be carbonized on the surface of the particles. As a result, the internal defects of particles of the resulting carbon material cannot be effectively reduced, and the infiltration of electrolyte into the pore structure inside the resulting carbon material particles cannot be effectively blocked. In this instance, the adsorption amount A of linseed kernel oil to the carbon material and/or the specific surface area B of the carbon material will be larger and the A×B of the carbon material will be larger, thereby affecting the initial Coulombic efficiency, cycle performance and storage performance of secondary batteries. When the holding time is too long, the filling material is easy to flow and fill into the entire pore structure of the raw material. In this instance, the adsorption amount A of linseed kernel oil to the carbon material and/or the specific surface area B of the carbon material will be smaller and the A×B of the carbon material will be smaller. As a result, the resulting carbon material produces a larger volume change during deintercalation and intercalation of reactive ions, and the particles are more prone to break, the consumption of active ions by the SEI film formation increases, and the irreversible capacity loss of the secondary battery increases. Meanwhile, the cycle performance, storage performance and rate performance of secondary batteries are also affected.

In some embodiments, the second heating process is carried out by heating it to a temperature of from 450°C to 550°C and holding it at this temperature for 0.5 to 2 hours.

In some embodiments, the third heating process is carried out by heating it to a temperature of T₁ and holding it at this temperature for t₁.

In the staged heating process, the temperature is first raised to 200°C-250°C, and since the heating temperature is higher than the softening point of the filling material, the filling material is melted and softened by heating at this time, and holding it at this temperature for 0.5h-2h can make it flow and fill the pore structure of the raw material. After that, the temperature is raised to from 450°C to 550°C, at which temperature the melted and softened filling material undergoes a carbonization reaction, gradually forming a semi-coke state and turning into a viscous liquid or solid. As a result, the filling material is prevented from entering into all the pore structures of the raw material. Finally, the temperature is raised to the first temperature T₁, at which temperature the filling material undergoes a carbonization reaction. As a result, the pore structures occupied by the filling material can be effectively filled, thereby reducing the surface defects, which is in turn conducive to enable the carbon material to have a suitable adsorption amount A of linseed kernel oil and/or a suitable specific surface area B, to enable the A×B of the carbon material within a suitable range, also to regulate the size of the pores and/or the number of pores in the external region and the internal region of the carbon material within a suitable range and to regulate S₂/S₁ within a suitable range.

In some embodiments, in step 2, the temperature is raised up to the first temperature T₁ at a rate of 1°C/min-10°C/min. For example, the heating rate may be 1.5°C/min, 2°C/min, 3°C/min, 4°C/min, 5°C/min, 6°C/min, 7°C/min, 8°C/min, 9°C/min, 10°C/min, or in a range comprising any value. Optionally, the heating rate is 1.5°C/min-8°C/min.

In some embodiments, the first heating process is carried out at a heating rate of 1°C/min-10°C/min, optionally 1.5°C/min-8°C/min.

The inventor found during the research that when the heating rate of the first heating process is within the above range, it is possible to regulate the size of the pores and/or the number of pores in the external region and the internal region of the carbon material within a suitable range and to regulate S₂/S₁ within a suitable range. In addition, the following situations can be effectively avoided: when the heating rate is excessively large, the filling material may be carbonized on the surface of the raw material particles, resulting in the filling material not being able to flow easily to fill the pore structure of the raw material, and thus not being able to effectively reduce the defects inside the resulting carbon material particles, and not being able to effectively prevent the electrolyte from infiltrating into the pore structure inside the obtained carbon material particles, which then affects the initial Coulombic efficiency, the cycle performance and storage performance of secondary batteries. When the heating rate is excessively small, the filling material is easy to flow and fill into all the pore structure of the raw material, resulting in a larger volume change of the carbon material in the process of active ions' intercalation and deintercalation, and the particles are more prone to fragmentation, which will increase the consumption of active ions by the SEI film formation, increase the irreversible capacity loss of the secondary battery, and also affect the cycle performance, storage performance, and rate performance.

In some embodiments, the heating rate of the second heating process may be 1°C/min-10°C/min, optionally 1.5°C/min-8°C/min.

In some embodiments, the heating rate of the third heating process may be 1°C/min-10°C/min, optionally 1.5°C/min-8°C/min.

In some embodiments, in step 2, the first temperature T₁ is from 700°C to 1100°C. For example, the first temperature may be 750°C, 800°C, 850°C, 900°C, 950°C, 1000°C, 1050°C, 1100°C, or within a range consisting of any of the above values. Optionally, the first temperature T₁ is from 750°C to 1100°C.

The inventor found during the research that setting the first temperature within the above range is favorable to enable the carbon material to have a suitable adsorption amount A of linseed kernel oil and/or a suitable specific surface area B, to enable the A×B of the carbon material within a suitable range, and also to regulate the size of the pores and/or the number of pores in the external region and the internal region of the carbon material within a suitable range and to regulate S₂/S₁ within a suitable range. In addition, the following situations can be avoided: when the first temperature is too low, the filling material may not be completely converted into carbon material, and will continue to decompose into small molecules during subsequent heat treatment. As a result, the actual residual carbon left in the filling region will have a more porous structure, and then the internal defects of particles of the resulting carbon material cannot be effectively reduced, and the infiltration of electrolyte into the pore structure inside the resulting carbon material particles cannot be effectively blocked. In this instance, the resulting carbon material has more surface defects, the adsorption amount A of linseed kernel oil to the carbon material and/or the specific surface area B of the carbon material will be larger and the A×B of the carbon material will be larger, thereby affecting the initial Coulombic efficiency, cycle performance and storage performance of secondary batteries. When the first temperature is too high, the energy consumption and the cost for the preparation process of the carbon material increase.

In some embodiments, the first time t₁ is from 0.5h to 5h. For example, the first time t₁ may be 1h, 1.5h, 2h, 2.5h, 3h, 3.5h, 4h, 4.5h, 5h, or within a range consisting of any of the above values. Optionally, the first time t₁ is from 0.5h to 3h.

The inventor found during the research that setting the first time within the above range is favorable to enable the carbon material to have a suitable adsorption amount A of linseed kernel oil and/or a suitable specific surface area B, to enable the A×B of the carbon material within a suitable range, and also to regulate the size of the pores and/or the number of pores in the external region and the internal region of the carbon material within a suitable range and to regulate S₂/S₁ within a suitable range. In addition, the following situations can be avoided: when the first time is too short, the filling material may not be completely converted into carbon material, and will continue to decompose into small molecules during subsequent heat treatment. As a result, the actual residual carbon left in the filling region will have a more porous structure, and then the internal defects of particles of the resulting carbon material cannot be effectively reduced, and the infiltration of electrolyte into the pore structure inside the resulting carbon material particles cannot be effectively blocked. In this instance, the resulting carbon material has more surface defects, the adsorption amount A of linseed kernel oil to the carbon material and/or the specific surface area B of the carbon material will be larger and the A×B of the carbon material will be larger, thereby affecting the initial Coulombic efficiency, cycle performance and storage performance of secondary batteries. When the first time is too long, the energy consumption and the cost for the preparation process of the carbon material increase.

In some embodiments, in step 2, the heat treatment may be performed in an intermediate frequency furnace, a roller kiln, a rotary kiln, or a push plate kiln.

In some embodiments, in step 2, atmosphere for the heating treatment may be a protective gas atmosphere. The protective gas may include one or more of nitrogen, argon and helium.

In step 2, by adjusting one or more of the heating rate, the first temperature, the first time, the heating process, etc., within the range described above is favorable to prepare the desired carbon material, for example to enable the carbon material to have a suitable adsorption amount A of linseed kernel oil and/or a suitable specific surface area B, to enable the A×B of the carbon material within a suitable range, also to regulate the size of the pores and/or the number of pores in the external region and the internal region of the carbon material within a suitable range and to regulate S₂/S₁ within a suitable range.

In some embodiments, the second temperature T₂ is from 1920°C to 2520°C. For example, the second temperature may be 1950°C, 2000°C, 2050°C, 2100°C, 2150°C, 2200°C, 2250°C, 2300°C, 2350°C, 2400°C, 2450°C, 2500°C, or within a range consisting of any of the above values. Optionally, the second temperature T₂ is from 2050°C to 2400°C.

The inventor found during the research that setting the second temperature within the above range is favorable to enable the carbon material to have a suitable adsorption amount A of linseed kernel oil and/or a suitable specific surface area B, to enable the A×B of the carbon material within a suitable range, and to enable the carbon material to have less surface defect, high specific capacity and/or high compaction density. In addition, the following situations can be avoided: when the second temperature is too low, the resulting carbon material has more surface defects. In this instance, the adsorption amount A of linseed kernel oil to the carbon material and/or the specific surface area B of the carbon material will be larger and the A×B of the carbon material will be larger, thereby affecting the initial Coulombic efficiency, cycle performance and storage performance of secondary batteries. When the second temperature is excessively high, the content of disordered carbon in the carbon material obtained is too low, and the crystallinity and graphitization of the carbon material are high, which is not conducive to the intercalation and deintercalation of active ions. Meanwhile, the volume change of the carbon material during the charging and discharging process is also large. As a result, the risk of fragmentation of the carbon material particles increases, and thus the cycle performance and dynamic performance of secondary batteries are affected. Furthermore, when the second temperature is excessively high, the energy consumption and cost of the preparation process of the carbon material will be increased.

In some embodiments, the second time t₂ is from 1h to 6h. For example, the second time t₁ may be 2h, 2.5h, 3h, 3.5h, 4h, 4.5h, 5h, 5.5h, 6h, or in a range comprising any of the above values. Optionally, the second time t₂ is from 2h to 6h.

The inventor found in the course of the research that setting the second time within the above range is favorable to enable the carbon material to have a suitable adsorption amount A of linseed kernel oil and/or a suitable specific surface area B, to enable the A×B of the carbon material within a suitable range, and to enable the carbon material to have less surface defect, high specific capacity and/or high compaction density. In addition, the following situations can be avoided: when the second time is too short, the resulting carbon material has more surface defects. In this instance, the adsorption amount A of linseed kernel oil to the carbon material and/or the specific surface area B of the carbon material will be larger and the A×B of the carbon material will be larger, thereby affecting the initial Coulombic efficiency, cycle performance and storage performance of secondary batteries. When the second time is excessively long, the content of disordered carbon in the carbon material obtained is too low, and the crystallinity and graphitization of the carbon material are high, which is not conducive to the intercalation and deintercalation of active ions. Meanwhile, the volume change of the carbon material during the charging and discharging process is also large. As a result, the risk of fragmentation of the carbon material particles increases, and thus the cycle performance and dynamic performance of secondary batteries are affected. Furthermore, when the second temperature is excessively high, the energy consumption and cost of the preparation process of the carbon material will be increased.

In some embodiments, in Step 3, the heat treatment may be carried out in an intermediate frequency furnace, a chamber graphitization furnace, an Acheson graphitization furnace, a continuous graphitization furnace, or an inner string graphitization furnace.

In some embodiments, in Step 3, atmosphere for the heating treatment in the medium frequency furnace, continuous graphitization furnace may be a protective gas atmosphere. The protective gas may include one or more of nitrogen, argon, and helium.

By adjusting one or more of the second temperature, the second time within the above range, it is favorable to reduce the content of disordered carbon in the carbon material, and it is also favorable to enable the carbon material to have a suitable adsorption amount A of linseed kernel oil and/or a suitable specific surface area B, and to enable the A×B of the carbon material within a suitable range

The method for preparing the carbon material of the present application is simple and safe, does not require preset pressure or vacuum treatment, and can be used without an additional depolymerization process in the heat treatment process. The carbon material prepared in the present application has small volume expansion, high structural stability and less surface defect, which can be further have high specific capacity and high initial Coulombic efficiency, and can also make secondary batteries have high initial Coulombic efficiency, high energy density and good cycle performance and storage performance.

The preparation method of the present application has low cost, high practicality, and is suitable for large to scale production.

### Secondary Battery

In the third aspect, the present embodiment provides a secondary battery.

There are no specific restrictions on the types of secondary batteries in the present application, for example, the secondary battery may be a lithium-ion batteries. Normally, the secondary battery comprises a positive electrode plate, a negative electrode plate, and electrolytes. During the charging and discharging process of the secondary battery, active ions repeatedly go through intercalation and deintercalation back and forth between the positive electrode plate and the negative electrode plate, and the electrolyte plays the role of conducting active ions between the positive electrode plate and the negative electrode plate. The present application has no particular limitation on the type of the electrolyte, which may be selected according to actual needs. For example, the electrolyte may be selected from at least one of a solid electrolyte and a liquid electrolyte (i.e., an electrolytic solution). In the secondary battery employing an electrolytic solution, and in some secondary batteries employing a solid electrolyte, a separator may be included, which is provided between the positive electrode plate and the negative electrode plate to serve as an isolation.

### [Negative electrode plate]

In some embodiments, the negative electrode plate includes a negative electrode current collector and a negative electrode film layer arranged on at least one surface of the negative electrode current collector. For example, the negative electrode current collector has two surfaces opposite in the thickness direction thereof, and the negative electrode film layer is arranged on either or both of the two opposite surfaces of the negative electrode current collector.

In some embodiments, the negative electrode film layer comprises the carbon material according to the first aspect of the present application or the carbon material prepared by the method described in the second aspect of the present application. Accordingly, the secondary battery can have high initial columbic efficiency, high energy density and good cycle and storage performances.

In some embodiments, the negative electrode film layer may further include other negative electrode active materials in addition to the aforementioned carbon materials. In some embodiments, the other negative electrode active materials include but are not limited to one or more of conventional natural graphite, artificial graphite, soft carbon, hard carbon, silicon-based materials, tin-based materials, and lithium titanate. The silicon-based material may include one or more of elemental silicon, a silicon oxide, a silicon carbon composite, a silicon nitrogen composite, and a silicon alloy material. The tin-based material may include one or more of elemental tin, a tin oxide, and a tin alloy material.

In some embodiments, the negative electrode film layer may optionally include a negative electrode conductive agent. In the present application, there is no specific restriction on the types of negative electrode conductive agents. For example, the negative electrode conductive agent may include one or more of superconducting carbon, conductive graphite, acetylene black, carbon black, Ketjen black, carbon dots, carbon nanotubes, graphene, and carbon nanofibers.

In some embodiments, the negative electrode film layer may optionally include a negative electrode binder. In the present application, there is no specific restriction on the type of negative electrode binders. For example, the negative electrode binder may include one or more of styrene butadiene rubber (SBR), water-soluble unsaturated resin SR-1B, water-based acrylic resin (such as polyacrylic acid PAA, polymethyl acrylic acid PMAA, and polyacrylic acid sodium PAAS), polyacrylamide (PAM), polyvinyl alcohol (PVA), sodium alginate (SA), and carboxymethyl chitosan (CMCS).

In some embodiments, the negative electrode film layer may optionally include other additives. For example, other additives may include a thickener, such as sodium carboxymethyl cellulose (CMC), and a PTC thermistor material.

In some embodiments, the negative electrode current collector may be a metal foil or composite current collector. As an example of the metal foil, a copper foil may be used. The composite current collector may include a polymeric material base layer and a metal material layer formed on at least one surface of the polymeric material base layer. As an example, the metal material may comprise one or more of copper, copper alloy, nickel, nickel alloy, titanium, titanium alloy, silver, and silver alloy, and the polymeric material base layer may include one or more of polypropylene (PP), polyethylene terephthalate (PET), polybutylene terephthalate (PBT), polystyrene (PS), and polyethylene (PE).

The negative electrode film layer is usually formed by applying the negative electrode slurry on the negative electrode current collector, drying, and cold pressing. The negative electrode slurry is usually formed by dispersing the negative electrode active material, optional conductive agent, optional binder, and other optional additives in a solvent and stirring evenly. The solvent may be N-methylpyrrolidone (NMP) or deionized water, but is not limited thereto.

The negative electrode plate does not exclude other additional functional layers other than the negative electrode film layer. For example, in some embodiments, the negative electrode plate described in the present application further includes a conductive primer layer sandwiched between the negative electrode current collector and the negative electrode film layer, arranged on the surface of the negative electrode current collector (for example, composed of a conductive agent and a binder). In some embodiments, the negative electrode plate described in the present application also includes a protective layer cladding on the surface of the negative electrode film layer.

### [Positive electrode plate]

In some embodiments, the positive electrode plate includes a positive electrode current collector and a positive electrode film layer arranged on at least one surface of the positive electrode current collector. For example, the positive electrode current collector has two surfaces opposite in the thickness direction thereof, and the positive electrode film layer is arranged on either or both of the two opposite surfaces of the positive electrode current collector.

The positive electrode current collector may be a metal foil or composite current collector. For example, the metal foil may be an aluminum foil. The composite current collector may include a polymeric material base layer and a metal material layer formed on at least one surface of the polymeric material base layer. For example, the metal material may include one or more of aluminum, aluminum alloys, nickel, nickel alloys, titanium, titanium alloys, silver, and silver alloys. For example, the polymeric material base layer may include one or more of polypropylene (PP), polyethylene terephthalate (PET), polybutylene terephthalate (PBT), polystyrene (PS), and polyethylene (PE).

The positive electrode film layer typically includes a positive electrode active material, optional binder, and optional conductive agent. The positive electrode film layer is usually formed by applying the positive electrode slurry on the positive electrode current collector, drying, and cold pressing. The positive electrode slurry is usually formed by dispersing the positive electrode active material, optional conductive agent, optional binder, and any other components in a solvent and stirring evenly. The solvent may be N-methylpyrrolidone (NMP), but is not limited thereto. As an example, the positive electrode binder may include one or more selected from polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin. As an example, the positive electrode conductive agent may include one or more selected from superconducting carbon, conductive graphite, acetylene black, carbon black, Ketjen black, carbon dots, carbon nanotubes, graphene, and carbon nanofibers.

The positive electrode active material may be a positive electrode active material commonly known in the art for secondary batteries.

When the secondary battery of the present application is a lithium-ion battery, the positive electrode active material may include at least one of lithium transition metal oxide, lithium-containing phosphate, or their respective modified compounds. Examples of the lithium transition metal oxide may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt aluminium oxide, or modified compounds thereof. Examples of the lithium-containing phosphate may include, but are not limited to, at least one of lithium iron phosphate, a composite of lithium iron phosphate and carbon, lithium manganese phosphate, a composite of lithium manganese phosphate and carbon, lithium ferromanganese phosphate, a composite of lithium ferromanganese phosphate and carbon, or their respective modified compounds.

In some embodiments, in order to further increase the energy density of the secondary battery, the positive electrode active material for the lithium-ion battery may include one or more of the lithium transition metal oxides with the formula LiₐNi_{b}Co_{c}MₐOₑAᵣ and modified compounds thereof, in which 0.8 ≤ a ≤ 1.2, 0.5 ≤ b < 1, 0 < c < 1, 0 < d < 1, 1 ≤ e ≤ 2, 0 ≤ f ≤ 1, M is one or more selected from Mn, Al, Zr, Zn, Cu, Cr, Mg, Fe, V, Ti, and B, and A is one or more selected from N, F, S, and Cl.

In some embodiments, as an example, the positive electrode active material for a lithium-ion battery may include one or more of LiCoO₂, LiNiO₂, LiMnO₂, LiMn₂O₄, LiNi_{1/3}Co_{1/3}Mn_{1/3}O₂ (NCM333), LiNi_{0.5}CO_{0.2}Mn_{0.3}O₂ (NCM523), LiNi_{0.6}CO_{0.2}Mn_{0.2}O₂ (NCM622), LiNi_{0.8}Co₀.₁Mn_{0.1}O₂ (NCM811), LiNi_{0.85}Co_{0.15}Al_{0.05}O₂, LiFePO₄ and LiMnPO₄.

In the present application, the modified compounds of the foregoing positive electrode active materials may undergo doping modification and/or surface coating modification of the positive electrode active materials.

### [Electrolyte]

In some embodiments, the electrolyte is an electrolytic solution comprising an electrolyte salt and an organic solvent.

There is no specific restriction on the type of the electrolyte salt, which may be selected according to actual needs.

When the secondary battery of the present application is a lithium-ion battery, as an example, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalate (LiDFOB), lithium bisoxalate (LiBOB), lithium difluorophosphate (LiPO₂F₂), lithium difluorobisoxalate phosphate (LiDFOP), and lithium tetrafluorooxalate phosphate (LiTFOP).

There is no specific restriction on the type of the solvent is not specifically limited, which may be selected according to actual needs. As an example, the organic solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butyl carbonate (BC), fluoroethylene carbonate (FEC),methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and ethylsulfonylethane (ESE).

In some embodiments, the electrolytic solution may further optionally include additives. For example, the additives may include a negative electrode film-forming additive, a positive electrode film-forming additive, as well as additives that can improve certain performance of secondary batteries, such as an additive that improves overcharge performance of batteries, an additive that improves high-temperature performance of batteries, and an additive that improves low-temperature power performance of batteries.

### [Separator]

There is no particular restriction on the type of the separator in the present application. The separator may be any known porous separator with good chemical and mechanical stability.

In some embodiments, the material of the separator may include one or more of glass fibers, a non-woven fabric, polyethylene, polypropylene, and polyvinylidene fluoride. The separator may be a single-layer thin film or a multi-layer composite thin film without special limitations. When the separator is a multi-layer composite thin film, materials of various layers may be the same or different.

In some embodiments, the positive electrode plate, the negative electrode plate, and the separator may be manufactured into an electrode assembly through a winding process or a stacking process.

In some embodiments, the secondary battery may include an outer package. The outer package may be used to encapsulate the electrode assembly and electrolyte.

In some embodiments, the outer package of the secondary battery may be a hard case, such as a hard plastic case, an aluminum case, a steel case, and the like. The outer package of the secondary battery may also be a soft package, such as a pouch-type soft package. A material of the soft bag can be plastic, such as one or more of polypropylene (PP), polybutylene terephthalate (PBT), and polybutylene succinate (PBS).

The shape of the secondary battery is not particularly limited in the present application, and it may be cylindrical, square, rectangular or any other shape. FIG. 2 is a schematic diagram of a secondary battery 5 of a rectangular structure as an example.

In some embodiments, as shown in FIG. 3, the outer package may include a casing 51 and a cover plate 53, wherein the casing 51 may include a bottom plate and side plates connected to the bottom plate, and the bottom plate and the side plates are enclosed to form an accommodating cavity. The casing 51 has an opening communicating with the accommodating cavity, and the cover plate 53 is used to cover the opening to close the accommodating cavity. A positive electrode plate, a separator, and a negative electrode plate may be made into an electrode assembly 52 by a winding process or a stacking process. The electrode assembly 52 is packaged in the accommodating cavity, and the electrolytic solution is infiltrated in the electrode assembly 52. The number of electrode assemblies 52 contained in the secondary battery 5 may be one or several, and may be adjusted according to requirements.

The method for preparing the secondary battery in the present application is well-known. In some embodiments, the positive electrode plate, the separator, the negative electrode plate, and the electrolytic solution may be assembled to form the secondary battery. As an example, the positive electrode plate, the separator, and the negative electrode plate may form an electrode assembly through a winding or stacking process, the electrode assembly is placed in an outer package and dried, then the electrolytic solution is injected, followed by vacuum packaging, standing, formation, shaping, and other processes, thereby obtaining the secondary battery.

In some embodiments of the present application, the secondary batteries according to the present application can be assembled into a battery module, and the number of secondary batteries contained in the battery module can be more than one, and the specific number can be adjusted according to application and capacity of the battery module.

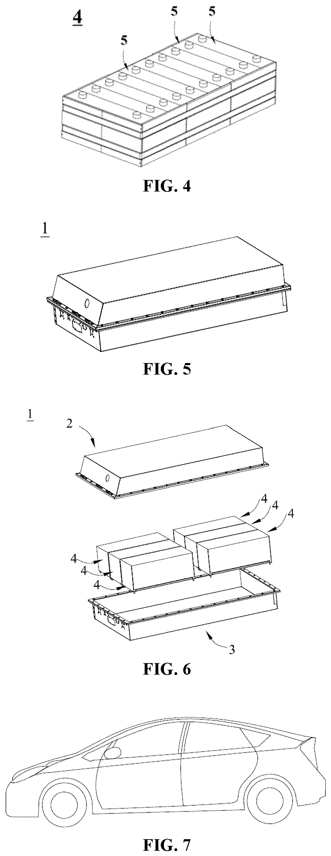

FIG. 4 is a schematic diagram of the battery module 4 as an example. As shown in FIG. 4, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

In some embodiments, the above-mentioned battery modules can also be assembled into a battery pack, and the number of battery modules included in the battery pack can be adjusted according to the application and capacity of the battery pack.

FIGS. 5 and 6 are schematic diagrams of the battery pack 1 as an example. As shown in FIGS. 5 and 6, the battery pack 1 may include a battery case and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery case in any manner.

### Electrical Device

The present application further provides an electrical device comprising at least one of the secondary battery, battery module, or battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select to use a secondary battery, a battery module or a battery pack according to its usage requirements.

FIG. 7 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electrical device is generally required to be light and thin, and a secondary battery can be used as a power source.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

### Example 1

### (1) Preparation of Carbon Material

Step 1: 100 mesh flake graphite was mechanical crushed, graded, spheroidized, and purified, to obtain natural spherical graphite having a volume distribution particle size Dv50 of 17µm and an ash content of 0.01%.

Step 2: The obtained natural spherical graphite and petroleum asphalt (having a softening point of 120°C, a volume distribution particle size Dv50 of 4.3 µm, and a coking value of 33%) were mixed at a mass ratio of 100:15 in a VC mixer for 30 minutes, and then the mixed materials were placed in a drum furnace, where the temperature was raised at a rate of 5°C/min to 230°C and was kept for 1 hours (the first heating process), and then the temperature was raised at a rate of 5°C/min to 500°C and was kept for 1 hours (the second heating process), and then the temperature was raised at a rate of 5°C/min to 1100°C and was kept for 1 hour (the third heating process). Then, the temperature was cooled to room temperature to obtain the intermediate.

Step 3: The obtained intermediate was placed in the Acheson graphitization furnace, and the temperature was raised to 2300°C and kept for 2 hours. After demagnetizing and screening, the carbon material was obtained.

### (2) Preparation of Button Battery (Half-Cell)

The above prepared carbon material was mixed with the styrene butadiene rubber (SBR) as a binder, sodium carboxymethyl cellulose (CMC) as a thickener, and carbon black as a conductive agent in an appropriate amount of solvent deionized water in a mass ratio of 96.2:1.8:1.2:0.8, to form a uniform negative electrode slurry; the negative electrode slurry was applied evenly on the surface of the negative electrode current collector copper foil, and dried in an oven for later use. Ethylene carbonate (EC), methyl ethyl carbonate (EMC), and diethyl carbonate (DEC) were mixed in a volume ratio of 1:1:1 to obtain an organic solvent. Then, LiPF₆ was dissolved in the aforementioned organic solvent to prepare an electrolytic solution with a concentration of 1 mol/L. Afterwards, a CR2430 button battery was assembled in an argon protected glove box by using a metal lithium sheet as the counter electrode and polyethylene (PE) film as the separator.

### (3) Preparation of Secondary Battery (Full-Cell)

The above prepared carbon material, carbon black (Super P) as a conductive agent, styrene butadiene rubber as a binder, and sodium carboxymethyl cellulose as a thickener were mixed in an appropriate amount of solvent deionized water in a weight ratio of 96:1:1:2 to form a negative electrode slurry. The negative electrode slurry was applied onto the two surfaces of the negative electrode current collector copper foil, and after drying and cold pressing, the negative electrode plate was obtained.

LiFePO₄, conductive carbon black and polyvinylidene fluoride were mixed in a weight ratio of 96:2.5:1.5, then an appropriate amount of solvent NMP was added under homogeneous stirring, to obtain the positive electrode slurry. The positive electrode slurry was applied onto the two surfaces of the positive electrode current collector aluminum foil, and after drying and cold pressing, the positive electrode plate was obtained.

The polypropylene film having a thickness of 12 µm was used as a separator, and was placed with the positive and negative electrode plates prepared above in sequence, so that the separator was between the positive and negative electrode plates to play a role of isolation; then they were wound to obtain the electrode assembly; the electrode assembly was placed in the outer packaging and dried, after which the electrolyte solution identical to that for the preparation of the button battery was injected. After vacuum encapsulation, standing, chemical formation, shaping, and other processes, the secondary battery was obtained.

### Comparative Example 1

The methods for preparing half-cells and full-cells were similar to those of Example 1, except that the method for preparing the carbon materials was different.

Mechanical crushing, grading, spheroidization, and purification of 100 mesh flake graphite were carried out to obtain natural spherical graphite with a volume distribution particle size Dv50 of 17µm and an ash content of 0.01%. Then the obtained natural spherical graphite was used as a carbon material to prepare half-cells and full-cells.

### Comparative Example 2

The methods for preparing half-cells and full-cells were similar to those of Example 1, except that the method for preparing the carbon materials was different.

Mechanical crushing, grading, spheroidization, and purification of 100 mesh flake graphite were carried out to obtain natural spherical graphite with a volume distribution particle size Dv50 of 17µm and an ash content of 0.01%.

The obtained natural spherical graphite and petroleum asphalt (having a softening point of 120°C, a volume distribution particle size Dv50 of 4.3µm, and a coking value of 33%) were mixed at a mass ratio of 100:15 in a VC mixer for 30 minutes, and then the mixed materials were graphitized at 3200°C for 10 hours. After cooled to room temperature, the carbon material was obtained.

### Comparative Example 3

The methods for preparing half-cells and full-cells were similar to those of Example 1, except that the method for preparing the carbon materials was different.

Mechanical crushing, grading, spheroidization, and purification of 100 mesh flake graphite were carried out to obtain natural spherical graphite with a volume distribution particle size Dv50 of 17µm and an ash content of 0.01%.

The obtained natural spherical graphite and petroleum asphalt (having a softening point of 120°C, a volume distribution particle size Dv50 of 4.3µm, and a coking value of 33%) were mixed at a mass ratio of 100:15 in a VC mixer for 30 minutes, and then the mixed materials were graphitized at 1300°C for 2 hours. After cooled to room temperature, the carbon material was obtained.

### Comparative Example 4

The methods for preparing half-cells and full-cells were similar to those of Example 1, except that the method for preparing the carbon materials was different.

Mechanical crushing, grading, spheroidization, and purification of 100 mesh flake graphite were carried out to obtain natural spherical graphite with a volume distribution particle size Dv50 of 17µm and an ash content of 0.01%.

Asphalt was added to a washing oil with high-speed stirring to make the asphalt fully dissolved, thereby obtaining an asphalt solution. 100g of natural spherical graphite was put into a reactor, where vacuuming was carried out for 60min and when the reactor vacuum reached 0.07MPa, the asphalt solution suction valve was opened so that the asphalt solution all sucked into the reactor. When the addition of the liquid was complete, the suction valve was closed, and then the vacuuming stopped. At the same time, the mixture was high-speed stirred for 40min, and then a pressure (12MPa) was applied. After impregnation was complete, the pressure was released so that the pressures inside and outside the reactor are the same, and then the content of the reactor was heated to 230°C under the protection of nitrogen and the washing oil was removed. When all the washing oil in the reactor was discharged, the content of the reactor was heated to 410°C under the pressure of 1.5MPa at the rate of 5°C/min to carry out thermal polymerisation reaction for 10h, and then cooled down to room temperature and discharged. The obtained material was held under isostatic pressure (10MPa) for 30min, then graphitized at high temperature (2800°C) for 4h, cooled to room temperature and crushed. The crushed material was mixed with asphalt at 100:5, and carbonised under the protection of nitrogen at 1000°C for 5h, cooled to room temperature to obtain carbon material without internal pores.

### Examples 2 to 23

The half-cells and full-cells were prepared according to the methods similar to those of Example 1, except that the preparation process parameters of the carbon material were adjusted, as detailed in Table 1.

### Performance Tests

### (1) Test of adsorption amount of linseed kernel oil to the carbon material

With reference to GB/T 3780.2-2017, the test was performed as follows: weigh 20g of dried test samples, place the weighed samples in the mixing chamber of the absorptometer, with the temperature of the mixing chamber at 23°C, and put the lid on; align the mouth of the oil delivery tube of the constant-velocity buret tube with the mouth of the lid of the mixing chamber above the orifice; and start the absorptometer, then the instrument starts to run and drop linseed kernel oil, with the increase of the oil absorption of the sample, the mixture from the free-flow state into a semi-plastic agglomerate, and the viscosity of the mixture is increasing, and is transmitted to the torque sensor system of the absorptometer; when the drop of oil make the semi-plastic agglomerate reach the preset torque level, the absorptometer and the constant-speed burette are automatically turned off; the value corresponding to 70% of the maximum torque of the fitted curve is read, and the adsorption amount A of linseed kernel oil to 100 g of the carbon material is calculated and obtained using the formula A = (V/m) × 100, in which V represents the volume of linseed kernel oil consumed by the corresponding sample at 70% of the maximum torque in ml, and m is the mass of the added sample in g.

### (2) Test of specific surface area

With reference to GB/T 19587-2017, the specific surface area B of the carbon material was tested by a nitrogen adsorption specific surface area analysis test method, and calculated by a BET (Brunauer Emmett Teller) method. The nitrogen adsorption specific surface area analysis test may be performed by a Tri-Star 3020 specific surface area pore size analysis tester from Micromeritics, USA.

### (3) X-ray diffraction analysis test of the carbon material

With reference to JIS K 0131-1996, and JB/T 4220-2011, an X-ray diffractometer was used to obtain the peak intensity and full width at half-maximum (FWHM) of the diffraction peak corresponding to the (110) crystal plane of the carbon material, the peak intensity and full width at half-maximum (FWHM) of the diffraction peak corresponding to the (002) crystal plane and then La(110) and Lc(002) of the carbon material were calculated according to Scheller's formula. La(110) denotes a microcrystalline size along the a-axis in the (110) crystal plane of the carbon material, and Lc(002) denotes a microcrystalline size along the c-axis in the (002) crystal plane of the carbon material. The measurement instrument was a Bruker D8 Discover X-ray diffractometer.

### (4) Test of the total pore area in the external region and internal region of the carbon material

The binder for making sample was evenly mixed with the carbon material powder and then the mixture was applied on the copper foil, drying at 60°C for 30 minutes; the samples were cut into pieces of 6mm × 6mm and then were pasted on the sample stage of CP-type Argon Ion Cross-Section Polisher; the samples were cut using a plasma beam to obtain the cross-section of the carbon material, the cross-section of the carbon material passed through the center of the carbon material particles. The test instrument may be IB- 09010 CP Argon Ion Cross-Section Polisher from JEOL, Japan.

The cross-section of the carbon materials were scanned using a scanning electron microscope. The test may be conducted according to JY/T010-1996. The test instrument may be Sigma 300 Scanning Electron Microscope from ZEISS, Germany.

The region comprising a distance of 0.25 L extending from the surface of the particles of the carbon material to the inside of the particles was noted as the external region, the region inside the external region was noted as the internal region, and L denoted the short-axis length of particles of the carbon material. A total pore area S₁ of the external region of particles of the carbon material and a total pore area S₂ of the internal region of particles of the carbon material were calculated using an image processing software. The image processing software may be AVIZO.

### (5) Test of the initial columbic efficiency of the carbon material

The button battery as prepared above was firstly discharged to current of 0.005V at a constant current of 0.15mA at 25°C, standing for 5 minutes, and then was discharged to 0.005V at a constant current of 10 µA, the discharging capacity of the button battery at the 1^{st} cycle was recorded; afterwards, it was charged to 2.0V at a constant current of 0.3mA and the charging capacity of the button battery at the 1^{st} cycle was recorded. The initial columbic efficiency of carbon materials (%) = charging capacity of button battery at the 1^{st} cycle o/discharging capacity of button battery at the 1^{st} cycle× 100%.

### (6) Cycle performance of secondary batteries

At 25°C, the secondary battery as prepared above was charged at a constant current of 1C to the upper limit cutoff voltage (corresponding to 100% SOC), then charged at the constant voltage to a current of 0.05C, standing for 5 minutes, and was discharged at a constant current of 1C to the lower limit cutoff voltage (corresponding to 0% SOC). The discharging capacity at this time was recorded as the 1^{st} cycle discharging capacity. The secondary battery was charged and discharged for cycles according to the above method, and the discharging capacity for each cycle was recorded. Capacity retention rate (%) of secondary battery after 2000 cycles at 25°C = discharging capacity at the 2000^{th} cycle/ discharging capacity at the 1^{st} cycle × 100%.

### (7) Storage performance of secondary batteries

At 25°C, the secondary battery as prepared above was charged at a constant current of 1C to the upper limit cutoff voltage (corresponding to 100% SOC), then charged at the constant voltage to a current of 0.05C, standing for 5 minutes, and was discharged at a constant current of 1C to the lower limit cutoff voltage (corresponding to 0% SOC). The discharging capacity at this time was recorded as the discharging capacity before storage.

At 25°C, the secondary battery as prepared above was charged at a constant current of 1C to the upper limit cutoff voltage (corresponding to 100% SOC), then charged at the constant voltage to a current of 0.05C. After that, the secondary battery was stored in a constant temperature oven at 60°C until the discharge capacity of the secondary battery after storage decays to 90% of the discharge capacity before storage. The test was stopped and the days of storage of the secondary battery was recorded.

The volume distribution particle size, tap density and other parameters of the carbon materials prepared in Examples 1-23 were within the range recited in the description of the present application.

As can be seen from the combined test results in Table 2, when the carbon material satisfied 36 ≤ A×B ≤ 75, the battery adopting it had high initial Coulombic efficiency, high energy density, and good cycle performance and storage performance. In addition, when the carbon material further satisfied 38 ≤ A × B ≤ 65 and optionally 39 ≤ A × B ≤ 55, the overall performance of the battery was further improved.

None of the carbon materials prepared in Comparative Examples 1-4 satisfied 36 ≤ A×B ≤ 75, and the battery adopting them failed to have high initial Coulombic efficiency, high energy density, and good cycle performance and storage performance.

In comparative Example 1, untreated natural spherical graphite was used as the carbon material, which had more internal pores. As can be seen from the combined test results in Table 2, the specific capacity, initial Coulombic efficiency, cycle performance and storage performance of the battery prepared therefrom were poor. The cycle number of the battery has not yet reached 2000, and its discharge capacity has already declined to 80% of the discharge capacity at the 1^{st} cycle.

The carbon material prepared in Comparative Examples 2-3 was natural spherical graphite having a carbon coating layer on its surface, in which the carbon layer only exists on the surface of the natural spherical graphite, failing to achieve the filling effect, and the carbon layer does not effectively prevent the electrolytic solution from penetrating into the pore structure inside the particles. As a result, the initial Coulombic efficiency, cycle performance, and storage performance of the battery were improved to a limited extent.

In comparative Example 4, in the preparation of the carbon material, the filling material was filled into all the pore structures inside the natural spherical graphite particles by means of isostatic pressure. As a result, the volume of the carbon material particles change greatly in the process of deintercalation and intercalation of active ions. In this instance, the particles are more likely to break, which leads to a limited improvement in the cycle performance and storage performance of the battery. Furthermore, there exists a large amount of soft carbon in the interior and/or on the surface of particles of the carbon material, which will increase the surface side reaction of the particles, and which further affects the cycle performance and storage performance of the battery. Meanwhile, the preparation process is complicated and not suitable for large-scale production.

As can be seen from the test results in Table 2, the comprehensive performance of the battery is further improved when the carbon material particles further satisfy S₂ > S₁, optionally 1.3 ≤ S₂/S₁ ≤ 450, and more optionally 1.8 ≤ S₂/S₁ ≤ 400. In this instance, the carbon material is further characterized by: a high number of pores and/or a large pore size in the internal region and a low number of pores and/or a small pore size in the external region. The pore structure in the internal region may provide a desired reserved expansion space for the volume change of the carbon material particles, thereby reducing the risk of the carbon material particles breaking out to create new interfaces, reducing the occurrence of side reactions and reducing the irreversible capacity loss of the secondary battery. When the carbon material has a small number of pores and/or a small pore size in the external region, it is possible to enable the carbon material particles to have a more stable structure, and to avoid an electrolytic solution to infiltrate into the pore structure inside the carbon material particles as much as possible, thereby reducing the side reactions and reducing the consumption of active ions by SEI film formation inside the carbon material particles. As a result, the carbon material that further satisfies the above structural features can further enhance the overall performance of the battery.

It should be noted that the present application is not limited to the above implementations. The above implementations are only examples, and all implementations having compositions and effects substantially identical to the technical concept of the present application are included in the scope of the present application. In addition, without deviating from the gist of the present application, various variations applied to the implementations that could be conceived by those skilled in the art and other modes constructed by combining some elements of the implementations are also included in the scope of the present application.

**Table 1**

| No. | Raw material | | Filling material | | | | Mass ratio of raw material to filling material | Step 2 | | | | | | | | | Step 3 | |
|---|---|---|---|---|---|---|---|---|---|---|---|---|---|---|---|---|---|---|
| | Dv50 (µm) | Ash content | Softening point (°C) | Dv50 (µm) | Coking value | Content of quinoline insoluble matter | | First heating process | | | Second heating process | | | Third heating process | | | Holding temperature (°C) | Holding time (h) |
| | | | | | | | | Heating rate (°C/min) | Holding temperature (°C) | Holding time (h) | Heating rate (°C/min) | Holding temperature (°C) | Holding time (h) | Heating rate (°C/min) | Holding temperature (°C) | Holding time (h) | | |
| Example 1 | 17 | 0.01% | 120 | 4.3 | 33% | 0.03% | 100:15 | 5 | 230 | 1 | 5 | 500 | 1 | 5 | 1100 | 1 | 2300 | 2 |
| Example 2 | 17 | 0.01% | 120 | 4.3 | 33% | 0.03% | 100:13 | 5 | 230 | 1 | 5 | 500 | 1 | 5 | 1100 | 1 | 2300 | 2 |
| Example 3 | 17 | 0.01% | 120 | 4.3 | 33% | 0.03% | 100:11 | 5 | 230 | 1 | 5 | 500 | 1 | 5 | 1100 | 1 | 2300 | 2 |
| Example 4 | 17 | 0.01% | 120 | 4.3 | 33% | 0.03% | 100:11 | 5 | 220 | 0.5 | 5 | 500 | 0.5 | 5 | 1100 | 0.5 | 2225 | 2 |
| Example 5 | 17 | 0.01% | 120 | 4.3 | 33% | 0.03% | 100:11 | 5 | 210 | 0.5 | 5 | 500 | 0.5 | 5 | 1100 | 0.5 | 2180 | 2 |
| Example 6 | 17 | 0.01% | 120 | 4.3 | 33% | 0.03% | 100:11 | 5 | 200 | 0.5 | 5 | 500 | 0.5 | 5 | 1100 | 0.5 | 2050 | 2 |
| Example 7 | 17 | 0.01% | 120 | 4.3 | 33% | 0.03% | 100:11 | 5 | 230 | 0 | 5 | 500 | 0 | 5 | 1100 | 0 | 2000 | 2 |
| Example 8 | 17 | 0.01% | 120 | 4.3 | 33% | 0.03% | 100:20 | 5 | 230 | 1 | 5 | 500 | 1 | 5 | 1100 | 1 | 2500 | 6 |
| Example 9 | 17 | 0.01% | 80 | 4.3 | 28% | 0.03% | 100:15 | 5 | 230 | 1 | 5 | 500 | 1 | 5 | 1100 | 1 | 2300 | 2 |
| Example 10 | 17 | 0.01% | 143 | 4.3 | 38% | 0.03% | 100:15 | 5 | 230 | 1 | 5 | 500 | 1 | 5 | 1100 | 1 | 2300 | 2 |
| Example 11 | 17 | 0.01% | 158 | 4.3 | 42% | 0.03% | 100:15 | 5 | 230 | 1 | 5 | 500 | 1 | 5 | 1100 | 1 | 2300 | 2 |
| Example 12 | 17 | 0.01% | 175 | 4.3 | 46% | 0.03% | 100:15 | 5 | 230 | 1 | 5 | 500 | 1 | 5 | 1100 | 1 | 2300 | 2 |
| Example 13 | 17 | 0.01% | 200 | 4.3 | 50% | 0.03% | 100:15 | 5 | 250 | 1 | 5 | 500 | 1 | 5 | 1100 | 1 | 2300 | 2 |
| Example 14 | 17 | 0.01% | 120 | 4.3 | 33% | 0.03% | 100:15 | 1 | 230 | 1 | 5 | 500 | 1 | 5 | 1100 | 1 | 2300 | 2 |
| Example 15 | 17 | 0.01% | 120 | 4.3 | 33% | 0.03% | 100:15 | 3 | 230 | 1 | 5 | 500 | 1 | 5 | 1100 | 1 | 2300 | 2 |
| Example 16 | 17 | 0.01% | 120 | 4.3 | 33% | 0.03% | 100:15 | 10 | 230 | 1 | 5 | 500 | 1 | 5 | 1100 | 1 | 2300 | 2 |
| Example 17 | 17 | 0.01% | 120 | 4.3 | 33% | 0.03% | 100:15 | 5 | 230 | 1 | 5 | 500 | 1 | 5 | 600 | 1 | 2300 | 2 |
| Example 18 | 17 | 0.01% | 120 | 4.3 | 33% | 0.03% | 100:15 | 5 | 230 | 1 | 5 | 500 | 1 | 5 | 700 | 1 | 2300 | 2 |
| Example 19 | 17 | 0.01% | 120 | 4.3 | 33% | 0.03% | 100:15 | 5 | 230 | 1 | 5 | 500 | 1 | 5 | 850 | 1 | 2300 | 2 |
| Example 20 | 17 | 0.01% | 120 | 4.3 | 33% | 0.03% | 100:15 | 5 | 230 | 1 | 5 | 500 | 1 | 5 | 950 | 1 | 2300 | 2 |
| Example 21 | 17 | 0.01% | 120 | 4.3 | 33% | 0.03% | 100:15 | 5 | 230 | 1 | 5 | 500 | 1 | 5 | 1200 | 1 | 2300 | 2 |
| Example 22 | 17 | 2% | 120 | 4.3 | 33% | 0.03% | 100:15 | 5 | 230 | 1 | 5 | 500 | 1 | 5 | 1100 | 1 | 2300 | 2 |
| Example 23 | 17 | 0.01% | 120 | 4.3 | 33% | 2% | 100:15 | 5 | 230 | 1 | 5 | 500 | 1 | 5 | 1100 | 1 | 2300 | 2 |

**Table 2**

| No. | Carbon material | | | | | | | | Performance of battery | | |
|---|---|---|---|---|---|---|---|---|---|---|---|
| | A×B | Adsorption amount A of linseed kernel oil (ml) | Specific surface area B (m²/g) | S₁ (µm²) | S₂ (µm²) | S₂/S₁ | La(110) (nm) | Lc(002) (nm) | Initial Coulombic efficiency | Capacity retention after 2000 cycles | Days of storage |
| Comparative Example 1 | 323.6 | 58.0 | 5.58 | 18.0 | 16.2 | 0.90 | 137.9 | 36.8 | 87.4% | Less than 2000 cycles | 106 |
| Comparative Example 2 | 119.8 | 56.0 | 2.14 | 16.6 | 16.0 | 0.96 | 130.2 | 35.4 | 90.6% | 83.0% | 111 |
| Comparative Example 3 | 84.2 | 51.0 | 1.65 | 16.4 | 15.8 | 0.96 | 107.8 | 26.9 | 91.4% | 88.0% | 128 |
| Comparative Example 4 | 32.9 | 35.0 | 0.94 | 1.7 | 1.4 | 0.82 | 128.2 | 36.2 | 91.6% | 88.6% | 133 |
| Example 1 | 40.0 | 40.0 | 1.00 | 2.7 | 10.5 | 3.89 | 124.4 | 33.2 | 95.0% | 92.0% | 210 |
| Example 2 | 45.0 | 42.9 | 1.05 | 3.4 | 10.9 | 3.21 | 125.1 | 34.4 | 94.7% | 92.0% | 206 |
| Example 3 | 50.0 | 41.7 | 1.20 | 3.8 | 11.9 | 3.13 | 124.6 | 32.9 | 94.4% | 92.0% | 204 |
| Example 4 | 55.0 | 38.2 | 1.44 | 4.5 | 11.8 | 2.62 | 125.4 | 34.1 | 93.8% | 92.0% | 202 |
| Example 5 | 60.0 | 36.6 | 1.64 | 5.7 | 11.7 | 2.05 | 116.3 | 30.9 | 93.5% | 92.0% | 199 |
| Example 6 | 65.0 | 36.7 | 1.77 | 7.0 | 11.9 | 1.70 | 110.7 | 28.3 | 93.3% | 92.0% | 196 |
| Example 7 | 74.0 | 35.6 | 2.08 | 9.9 | 11.8 | 1.19 | 119.0 | 30.4 | 92.9% | 92.0% | 190 |
| Example 8 | 40.7 | 37.0 | 1.10 | 2.1 | 10.0 | 4.76 | 130.2 | 35.4 | 95.7% | 91.0% | 201 |
| Example 9 | 49.1 | 44.6 | 1.10 | 5.7 | 11.2 | 1.96 | 124.1 | 33.2 | 93.1% | 90.0% | 190 |
| Example 10 | 44.9 | 42.0 | 1.07 | 5.3 | 11.6 | 2.19 | 124.7 | 33.5 | 94.7% | 91.3% | 207 |
| Example 11 | 52.6 | 44.2 | 1.19 | 6.0 | 11.8 | 1.96 | 124.6 | 33.2 | 94.4% | 91.0% | 204 |
| Example 12 | 63.5 | 45.7 | 1.39 | 10.0 | 11.9 | 1.19 | 124.4 | 33.6 | 94.1% | 90.6% | 193 |
| Example 13 | 75.0 | 42.1 | 1.78 | 11.1 | 12.1 | 1.09 | 124.0 | 33.7 | 93.8% | 90.2% | 189 |
| Example 14 | 36.4 | 38.7 | 0.94 | 3.2 | 6.5 | 2.03 | 124.2 | 33.2 | 95.2% | 90.5% | 212 |
| Example 15 | 38.6 | 39.4 | 0.98 | 3.4 | 8.8 | 2.59 | 124.4 | 33.1 | 95.1% | 92.0% | 211 |
| Example 16 | 50.6 | 46.0 | 1.10 | 9.5 | 11.9 | 1.25 | 124.4 | 33.2 | 94.3% | 91.0% | 197 |
| Example 17 | 46.3 | 41.0 | 1.13 | 7.0 | 13.5 | 1.93 | 124.2 | 33.3 | 95.0% | 90.3% | 195 |
| Example 18 | 45.0 | 40.2 | 1.12 | 5.2 | 13.3 | 2.56 | 124.4 | 33.2 | 95.0% | 90.6% | 206 |
| Example 19 | 44.3 | 40.6 | 1.09 | 4.7 | 13.2 | 2.81 | 124.1 | 33.6 | 95.2% | 91.0% | 209 |
| Example 20 | 41.6 | 40.0 | 1.04 | 3.8 | 12.9 | 3.39 | 124.4 | 33.2 | 95.0% | 91.4% | 213 |
| Example 21 | 39.6 | 40.0 | 0.99 | 2.6 | 10.4 | 4.00 | 124.4 | 33.2 | 95.0% | 92.9% | 219 |
| Example 22 | 40.8 | 40.0 | 1.02 | 3.9 | 11.7 | 3.00 | 124.4 | 33.2 | 94.6% | 90.1% | 202 |
| Example 23 | 40.6 | 40.6 | 1.00 | 3.7 | 11.9 | 3.22 | 124.4 | 33.2 | 94.7% | 90.0% | 200 |

## Claims

1. A carbon material, wherein the carbon material comprises a pore structure, an adsorption amount of linseed kernel oil to 100g of the carbon material 100 g is denoted as A in ml, a specific surface area of the carbon material is denoted as B in m²/g and the carbon material satisfies: 36 ≤ A×B ≤ 75.

2. The carbon material as claimed in claim 1, wherein 38 ≤ A×B ≤ 65, optionally, 39 ≤ A×B ≤ 55.

3. The carbon material as claimed in claim 1 or 2, wherein the adsorption amount A of linseed kernel oil to 100g of the first carbon-based material is from 30 mL to 50 mL, optionally from 35 mL to 47 mL; and/or
the specific surface area B of the carbon material is from 0.5 m²/g to 2.1 m²/g, optionally from 0.7 m²/g to 1.8 m²/g.

4. The carbon material as claimed in any one of claims 1 to 3, wherein the carbon material comprises more than one pore structure having a pore area greater than or equal to 0.1 µm², optionally more than one pore structure having a pore area of 0.12 µm² to 2.5 µm².

5. The carbon material as claimed in any one of claims 1 to 4, wherein the carbon material comprises an external region and an internal region disposed on the inside of the external region, the external region being a region formed by extending for a distance of 0.25 L from the surface of the particles of the carbon material towards the inside of the particles, L being a short-axis length of the particles of the carbon material; total pore area of the external region being denoted as S₁ and total pore area of the internal region being denoted as S₂, and S₂ > S₁.

6. The carbon material as claimed in claim 5, wherein 1.3 ≤ S₂/S₁ ≤ 450, optionally 1.8 ≤ S₂/S₁ ≤ 400.

7. The carbon material as claimed in claim 5 or 6, wherein
0.01µm² ≤ S₁ ≤ 12.0µm², optionally 0.02µm² ≤ S₁ ≤ 7.0µm²; and/or
2.5µm² ≤ S₂ ≤ 25.0µm², optionally 3.0µm² ≤ S₂ ≤ 20.5µm²; and/or
L ≥ 4 µm, optionally 6 µm ≤ L ≤ 18 µm.

8. The carbon material as claimed in any one of claims 5 to 7, wherein
the pore structure in the external region of the carbon material has an area of less than or equal to 0.2 µm², optionally less than or equal to 0.15 µm²; and/or
the internal region of the carbon material includes more than one pore structure having an area of greater than or equal to 0.15 µm², optionally more than one pore structure having an area of from 0.18 µm² to 2.5 µm².

9. The carbon material as claimed in any one of claims 5 to 8, wherein the external region of the carbon material has an interlayer spacing, denoted as d₁, the internal region of the carbon material has an interlayer spacing, denoted as d₂, and the carbon material satisfies d₁ ≥ d₂, optionally d₁ > d₂.

10. The carbon material as claimed in claim 9, wherein
d₁ is from 0.33565 nm to 0.33610 nm; and/or
d₂ is from 0.33557 nm to 0.33585 nm.

11. The carbon material as claimed in any one of claims 1 to 10, wherein
the carbon material has a graphitization degree of 94%-98%, optionally 95%-97%; and/or
the carbon material has La(110) of 100 nm-150 nm, optionally 110 nm-130 nm; and/or
the carbon material has Lc(002) of 20nm-45nm, optionally 28nm-40nm.

12. The carbon material as claimed in any one of claims 1 to 11, wherein the carbon material satisfies at least one of the following:
(1) the carbon material has a volume distribution particle size Dv50 of from 8.0 µm to 24.0 µm, optionally from 9.5 µm to 22.5 µm;
(2) the carbon material has a volume distribution particle size Dv10 of from 5.0 µm to 15.0 µm, optionally from 6.0 µm to 14.0 µm;
(3) the carbon material has a volume distribution particle size Dv90 of from 16.0 µm to 35.0 µm, optionally from 17.0 µm to 34.0 µm;
(4) the carbon material has (Dv90-Dv10)/Dv50 of from 0.55 to 1.55, optionally from 0.8 to 1.4;
(5) the carbon material has a tap density of from 0.8g/cm³ to 1.32g/cm³, optionally from 0.82g/cm³ to 1.28g/cm³;
(6) the carbon material has a specific capacity of from 355mAh/g to 371mAh/g, optionally from 360mAh/g to 370mAh/g; and
(7) the carbon material has a morphology comprising one or more of blocky, spherical, and quasi-spherical shapes.

13. A method for preparing a carbon material, comprising the following steps: Step 1, providing a raw material having multiple pore structures; Step 2, mixing the raw material with a filling material in a predetermined ratio homogeneously, and then holding it at a first temperature T₁ for a first time t₁ to obtain an intermediate; Step 3, holding the obtained intermediate at a second temperature T₂ for a second time t₂ to obtain a carbon material, wherein the carbon material comprises a pore structure, an adsorption amount of linseed kernel oil to 100g of the carbon material is denoted as A in ml, a specific surface area of the carbon material is denoted as B in m²/g and the carbon material satisfies: 36 ≤ A×B ≤ 75.

14. The method as claimed in claim 13, wherein the raw material satisfies at least one of the following:
(1) the raw material includes natural graphite, optionally the natural graphite includes one or more of flake graphite, natural spherical graphite, and microcrystalline graphite;
(2) the raw material has a volume distribution particle size Dv50 of from 8.5 µm to 24.0 µm, optionally from 10.5 µm to 22.5 µm; and
(3) the raw material has an ash content of ≤ 1 wt%.

15. The method as claimed in claim 13 or 14, wherein the filling material satisfies at least one of the following:
(1) the filling material has a softening point of from 110°C to 175°C, optionally from 120°C to 170°C,
(2) the filling material has a coking value of 26%-50%, optionally 33%-45%;
(3) the filling material has a volume distribution particle size Dv50 of less than or equal to 6 µm, optionally from 1 µm to 5 µm; and
(4) the filling material has a quinoline insoluble matter in a content of ≤ 1 wt%, optionally ≤ 0.8 wt%.

16. The method as claimed in claim 15, wherein the filling material comprises one or more of coal asphalt and petroleum asphalt.

17. The method as claimed in any one of claims 13 to 16, wherein a mass ratio of the filling material to the raw material is (10-32):100, optionally (10-25):100.

18. The method as claimed in any one of claims 13 to 16, wherein after mixing the raw material and filling material in a predetermined ratio homogeneously, the resulting mixture is heated to the first temperature T₁ by a staged heating process, optionally including a first heating process, a second heating process and a third heating process.

19. The method as claimed in claim 18, wherein
the first heating process is carried out by heating it to a temperature of from 200°C to 250°C and holding it at the temperature for 0.5 to 2 hours; and/or
the second heating process is carried out by heating it to a temperature of from 450°C to 550°C and holding it at the temperature for 0.5 to 2 hours; and/or
the third heating process is carried out by heating it to the first temperature T₁ and holding it at the first temperature T₁ for a first time t₁.

20. The method as claimed in any one of claim 13-19, wherein the resulting mixture is heated to the first temperature T₁ at a rate of 1°C/min-10°C/min, optionally 1.5°C/min-8°C/min.

21. The method as claimed in any one of claim 13-20, wherein
the first temperature T₁ is from 700°C to 1100°C, optionally from 750 to 1100°C; and/or
the first time t₁ is from 0.5 hour to 5 hours, optionally from 0.5 hours to 3 hours.

22. The method as claimed in any one of claim 13-21, wherein
the second temperature T₂ is from 1920°C to 2520°C, optionally from 2050°C to 2400°C; and/or
the second time t₂ is from 1h to 6h, optionally from 2h to 5h.

23. A secondary battery, comprising a negative electrode plate comprising the carbon material according to any one of claims 1 to 12 or the carbon material prepared by the method according to any one of claims 13 to 22.

24. An electrical device, comprising the secondary battery according to claim 23.
